# EUROPEAN PATENT APPLICATION

(11) **EP 4 808 192 A1**
(43) Date of publication of application: **16.09.2026**
(21) Application number: 24892851.7
(22) Date of filing: 22.07.2024
(51) Int. Cl.: H04W 24/08

(54) **INTERFERENCE MEASUREMENT METHOD AND RELATED APPARATUS**

(30) Priority: 25.11.2023 CN 202311603460
(71) Applicant: Huawei Technologies Co., Ltd., Shenzhen, Guangdong 518129 (CN)
(72) Inventor: ZHOU, Baojian, Shenzhen, Guangdong 518129 (CN); LUO, Jiajin, Shenzhen, Guangdong 518129 (CN); PENG, Xiaohui, Shenzhen, Guangdong 518129 (CN)
(74) Representative: Huawei European IPR
(86) International application number: PCT/CN2024/106654
(87) International publication number: WO 2025/107687

(57) **Abstract**

This application provides an interference measurement method and a related apparatus. Before or during sensing measurement of a sensing device, the sensing device can obtain a first interference measurement resource, where the first interference measurement resource is related to a measurement dimension of the sensing measurement of the sensing device; and then the sensing device receives, by using the first interference measurement resource, an interference measurement signal sent by an interference device. Because the first interference measurement resource for transmission of the interference measurement signal between the sensing device and the interference device is related to the measurement dimension of the sensing measurement of the sensing device, the interference measurement signal can reflect interference caused by the interference device to the sensing device in the measurement dimension of the sensing measurement. This helps the sensing device more accurately detect impact of the interference device on the sensing device, and improves accuracy of interference measurement in sensing scenarios.

## Description

This application claims priority to Chinese Patent Application No. 202311603460.9, filed with the China National Intellectual Property Administration on November 25, 2023 and entitled "INTERFERENCE MEASUREMENT METHOD AND RELATED APPARATUS", which is incorporated herein by reference in its entirety.

### TECHNICAL FIELD

Embodiments of this application relate to the communication field, and in particular, to an interference measurement method and a related apparatus.

### BACKGROUND

Interference in communication is caused by overlapping of communication signals of different users in time domain, frequency domain, or spatial domain, resulting in mutual impact among different communication signals and ultimately degrading communication performance. To improve communication performance, communication apparatuses need to perform interference measurement to obtain interference measurement results, and then based on these results, perform processing such as communication link management, channel estimation, and data demodulation.

Similar to interference in communication, there may be interference in sensing scenarios. For example, in sensing measurement, other signals may interfere with sensing signals , ultimately degrading sensing performance. To improve sensing performance, interference management such as interference measurement also needs to be performed.

However, in conventional technologies, interference measurement is performed on time-frequency resource grids defined for communication. In sensing scenarios, when time-frequency resources occupied by interference signals overlap time-frequency resources occupied by sensing measurement, the sensing measurement may not be affected. Therefore, interference measurement resources in the conventional technologies may not be suitable for measuring interference levels in sensing scenarios.

### SUMMARY

This application provides an interference measurement method and a related apparatus, to measure an interference level to sensing in sensing scenarios, so as to improve accuracy of interference measurement in the sensing scenarios.

According to a first aspect, this application provides an interference measurement method. The interference measurement method may be performed by a sensing device, or may be performed by a component (for example, a component like a processor, a chip, or a chip system) of the sensing device. The sensing device is used as an example. Before or during sensing measurement of the sensing device, the sensing device obtains a first interference measurement resource, where the first interference measurement resource is related to a measurement dimension of the sensing measurement of the sensing device; and then the sensing device receives, by using the first interference measurement resource, an interference measurement signal sent by an interference device.

In this application, because the first interference measurement resource for transmission of the interference measurement signal between the sensing device and the interference device is related to the measurement dimension of the sensing measurement of the sensing device, the interference measurement signal can reflect interference caused by the interference device to the sensing device in the measurement dimension of the sensing measurement. This helps the sensing device more accurately detect impact of the interference device on the sensing device, and improves accuracy of interference measurement in sensing scenarios.

In a possible implementation, the first interference measurement resource is related to an interference measurement range, and the interference measurement range is an effective measurement range of the sensing measurement in the measurement dimension. Optionally, the interference measurement range indicates a range in which interference is not tolerable for the sensing measurement. It may be understood that, when projection of the interference measurement signal in the measurement dimension having undergone sensing processing falls within the interference measurement range, the interference measurement signal causes interference to the sensing measurement; or when the projection of the interference measurement signal in the measurement dimension having undergone sensing processing does not fall within the interference measurement range, the interference measurement signal does not cause interference to the sensing measurement. This helps the sensing device determine whether the sensing device is affected by the interference device within the interference measurement range, and further improves accuracy of the interference measurement in the sensing scenarios.

In a possible implementation, the interference measurement method further includes: The sensing device determines interference measurement information based on the interference measurement signal, where the interference measurement information indicates a status of interference caused by the interference measurement signal to the sensing device in the sensing measurement dimension.

In this implementation, the sensing device determines the interference measurement information based on the received interference measurement signal, and quantizes the interference experienced by the sensing device into a specific value. This helps intuitively reflect the interference experienced by the sensing device, and facilitates subsequent interference management.

In a possible implementation, the interference measurement information includes an interference measurement value of the interference measurement signal in the measurement dimension. Optionally, the interference measurement information includes an interference measurement value of the interference measurement signal within the interference measurement range in the measurement dimension.

In this implementation, the interference measurement information determined by the sensing device can reflect interference within the interference measurement range in the measurement dimension, to help improve accuracy and efficiency of subsequent interference management.

In a possible implementation, that the sensing device obtains the first interference measurement resource includes: The sensing device sends a first interference measurement request, where the first interference measurement request includes the measurement dimension of the sensing measurement and first resource indication information, the first resource indication information indicates at least one first candidate interference measurement resource, and each first candidate interference measurement resource is related to the measurement dimension of the sensing measurement; and the sensing device receives a first interference measurement response, where the first interference measurement response includes second resource indication information, the second resource indication information indicates the first interference measurement resource, and the first interference measurement resource is determined based on the at least one first candidate interference measurement resource.

In this implementation, the sensing device triggers negotiation with the interference device to determine the first interference measurement resource. This helps the sensing device initiate interference measurement when interference management needs to be performed, so that the sensing device performs interference measurement as needed, thereby improving flexibility of the interference measurement. In addition, the first interference measurement request includes the measurement dimension of the sensing measurement. This helps the interference device take the measurement dimension of the sensing measurement into consideration when determining the first interference measurement resource, so that the interference device determines a resource that is more suitable for measuring interference in the measurement dimension, thereby improving accuracy of the interference measurement.

Optionally, the first interference measurement request further includes the interference measurement range, and the first candidate interference measurement resource is related to the interference measurement range. This helps the interference device take the interference measurement range into consideration when determining the first interference measurement resource, so that the interference device determines a resource that is more suitable for measuring interference in the measurement dimension, thereby improving accuracy of the interference measurement.

In a possible implementation, the interference measurement method further includes: The sensing device determines the at least one first candidate interference measurement resource based on the measurement dimension of the sensing measurement and a first correspondence, where the first correspondence includes at least one measurement dimension and at least one interference measurement resource corresponding to each measurement dimension. The first correspondence may be specified in a protocol, or may be pre-configured. This is not limited in this application.

In this implementation, the sensing device determines the at least one first candidate interference measurement resource based on the measurement dimension and the first correspondence. This helps improve efficiency of determining the first candidate interference measurement resource, and reduce processing overheads of the sensing device.

In a possible implementation, the interference measurement method further includes: The sensing device determines the at least one first candidate interference measurement resource based on the measurement dimension of the sensing measurement and the interference measurement range.

In this implementation, because the sensing device has taken the measurement dimension of the sensing measurement and the interference measurement range into consideration when determining the first candidate interference measurement resource, this helps the sensing device determine a candidate resource suitable for the interference measurement, thereby improving accuracy of the interference measurement.

In a possible implementation, that the sensing device obtains the first interference measurement resource includes: The sensing device receives a second interference measurement request, where the second interference measurement request includes third resource indication information, and the third resource indication information indicates at least one second candidate interference measurement resource supported by the interference device; and the sensing device sends a second interference measurement response, where the second interference measurement response includes fourth resource indication information, the fourth resource indication information indicates the first interference measurement resource, and the first interference measurement resource is determined based on the at least one second candidate interference measurement resource.

In this implementation, the interference device triggers negotiation with the sensing device to determine the first interference measurement resource, so that the interference device can actively trigger interference management in a scenario in which there are a small quantity of interference devices, thereby improving efficiency of the interference management.

In a possible implementation, the interference measurement method further includes: The sensing device determines the first interference measurement resource based on the measurement dimension of the sensing measurement and the at least one second candidate interference measurement resource.

In this implementation, the sensing device has taken the measurement dimension of the sensing measurement into consideration when determining the first interference measurement resource based on the at least one second candidate interference measurement resource, so that the sensing device determines a resource that is more suitable for measuring interference in the measurement dimension, thereby improving accuracy of the interference measurement.

In a possible implementation, that the sensing device determines the first interference measurement resource based on the measurement dimension of the sensing measurement and the at least one second candidate interference measurement resource includes: The sensing device determines the first interference measurement resource based on the measurement dimension of the sensing measurement, the interference measurement range, and the at least one second candidate interference measurement resource.

In this implementation, the sensing device has taken the measurement dimension of the sensing measurement and the interference measurement range into consideration when determining the first interference measurement resource based on the at least one second candidate interference measurement resource. This helps the sensing device determine whether the sensing device is affected by the interference device within the interference measurement range, and further improves accuracy of the interference measurement in the sensing scenarios.

In a possible implementation, the second candidate interference measurement resource is related to the measurement dimension of the sensing measurement.

In this implementation, not only a capability of the interference device but also the measurement dimension of the sensing measurement has been taken into consideration when the interference device provides the second candidate interference measurement resource to the sensing device. This helps provide a more accurate candidate interference measurement resource suitable for a specific measurement dimension to the sensing device, and helps the sensing device more quickly determine a first interference measurement resource suitable for a specific measurement dimension, thereby improving efficiency of the interference measurement.

In a possible implementation, the measurement dimension of the sensing measurement includes any one of the following:
range measurement; velocity measurement; angle measurement; imaging measurement; joint range-velocity measurement; joint range-angle measurement; joint velocity-angle measurement; or joint range-velocity-angle measurement.

In a possible implementation, the interference measurement method further includes: The sensing device determines, based on the interference measurement information, a parameter of a sensing signal and/or a sensing measurement resource occupied by the sensing signal, where the parameter of the sensing signal includes at least one of signal power, signal phase, or signal amplitude, and the sensing measurement resource includes at least one of a time domain resource, a frequency domain resource, or a port resource.

In this implementation, the sensing device can determine, based on the interference measurement information, an interference level caused by the interference device to the sensing device. The sensing device determines, with reference to the interference measurement information, a sensing signal sent by the sensing device in a subsequent sensing measurement process. This helps reduce interference of the interference device in the measurement dimension of the sensing measurement, to effectively mitigate or eliminate sensing interference.

In a possible implementation, the interference measurement method further includes: If a degree of interference indicated by the interference measurement information is greater than a first threshold, the sensing device sends first information to the interference device, where the first information includes an interference measurement report, and the interference measurement report includes the measurement dimension of the sensing measurement, the interference measurement information, and a second threshold.

Optionally, the first threshold is maximum interference tolerable by the sensing device. For example, when a degree of interference experienced by the sensing device is greater than the first threshold, a sensing measurement service of the sensing device may not be normally performed.

Optionally, the second threshold indicates a degree of interference expected by the sensing device. It may be understood that the second threshold indicates a degree to which interference is expected to be controlled during normal operating of the sensing device. It may also be understood that the second threshold indicates a degree to which the sensing device recommends that the interference device reduce interference. Optionally, the second threshold is less than or equal to the first threshold.

In this implementation, to reduce interference caused by the interference device to the sensing device, in addition to providing the interference measurement information and the measurement dimension to the interference device, the sensing device further provides a reference value (that is, the second threshold) indicating a degree to which the interference device is recommended to reduce the interference measurement signal. This helps the interference device quickly and effectively perform interference adjustment, to improve efficiency and accuracy of the interference management.

In a possible implementation, the interference measurement method further includes: If a degree of interference indicated by the interference measurement information is greater than a first threshold, the sensing device sends first information to the interference device, where the first information includes at least one adjustment indication, and each adjustment indication indicates the interference device to adjust one parameter of the interference measurement signal.

In this implementation, the sensing device directly provides, to the interference device, the adjustment indication used to adjust the interference measurement signal, and the interference device only needs to adjust the parameter of the interference measurement signal based on the adjustment indication. This helps reduce processing overheads used by the interference device to calculate an adjusted parameter.

In a possible implementation, the first information indicates the interference device to adjust the parameter of the interference measurement signal and/or a resource occupied by the interference measurement signal, the parameter of the interference measurement signal includes at least one of signal power, signal phase, or signal amplitude, and the resource includes at least one of a time domain resource, a frequency domain resource, or a port resource.

In this embodiment, the sensing device can send the first information to the interference device, where a basis for the interference device to adjust the interference measurement signal is provided by the first information. This helps the interference device accurately adjust the interference measurement signal, to reduce the interference of the interference device in the measurement dimension of the sensing measurement, thereby effectively mitigating or eliminating the sensing interference.

According to a second aspect, this application provides an interference measurement method. The interference measurement method may be performed by an interference device, or may be performed by a component (for example, a component like a processor, a chip, or a chip system) of the interference device. The interference device is used as an example. The interference device obtains a first interference measurement resource, where the first interference measurement resource is related to a measurement dimension of sensing measurement of a sensing device; and then the interference device sends an interference measurement signal by using the first interference measurement resource.

In this application, because the first interference measurement resource for transmission of the interference measurement signal between the sensing device and the interference device is related to the measurement dimension of the sensing measurement of the sensing device, the interference measurement signal can reflect interference caused by the interference device to the sensing device in the measurement dimension of the sensing measurement. This helps the sensing device more accurately detect impact of the interference device on the sensing device, and improves efficiency of interference measurement in sensing scenarios.

In a possible implementation, the first interference measurement resource is related to an interference measurement range, and the interference measurement range is an effective measurement range of the sensing measurement in the measurement dimension.

In a possible implementation, the interference measurement signal is used by the sensing device to determine interference measurement information based on the interference measurement signal, where the interference measurement information indicates a status of interference caused by the interference measurement signal to the sensing device in the sensing measurement dimension.

In a possible implementation, the interference measurement information includes an interference measurement value of the interference measurement signal in the measurement dimension. Optionally, the interference measurement information includes an interference measurement value of the interference measurement signal within the interference measurement range in the measurement dimension.

In a possible implementation, the sensing device triggers obtaining of the first interference measurement resource. Specifically, the interference device receives a first interference measurement request, where the first interference measurement request includes the measurement dimension of the sensing measurement and first resource indication information, the first resource indication information indicates at least one first candidate interference measurement resource, and each first candidate interference measurement resource is related to the measurement dimension of the sensing measurement; and then the interference device sends a first interference measurement response, where the first interference measurement response includes second resource indication information, the second resource indication information indicates the first interference measurement resource, and the first interference measurement resource is determined based on the at least one first candidate interference measurement resource.

Optionally, before the interference device sends the first interference measurement response, the interference device further performs the following step: The interference device determines the first interference measurement resource based on the measurement dimension of the sensing measurement and the at least one first candidate interference measurement resource.

Optionally, if the first interference measurement request further includes the interference measurement range, that the interference device determines the first interference measurement resource based on the measurement dimension of the sensing measurement and the at least one first candidate interference measurement resource includes:

The interference device determines the first interference measurement resource based on the measurement dimension of the sensing measurement, the interference measurement range, and the at least one first candidate interference measurement resource.

In another possible implementation, the interference device triggers obtaining of the first interference measurement resource. Specifically, the interference device sends a second interference measurement request, where the second interference measurement request includes third resource indication information, and the third resource indication information indicates at least one second candidate interference measurement resource supported by the interference device; and then the interference device receives a second interference measurement response, where the second interference measurement response includes fourth resource indication information, the fourth resource indication information indicates the first interference measurement resource, and the first interference measurement resource is determined based on the at least one second candidate interference measurement resource.

Optionally, the second candidate interference measurement resource is related to the measurement dimension of the sensing measurement.

Optionally, the measurement dimension of the sensing measurement includes any one of the following:
range measurement; velocity measurement; angle measurement; imaging measurement; joint range-velocity measurement; joint range-angle measurement; joint velocity-angle measurement; or joint range-velocity-angle measurement.

In a possible implementation, the interference measurement method further includes: The interference device receives first information, where the first information includes an interference measurement report, and the interference measurement report includes the measurement dimension of the sensing measurement, the interference measurement information, and a second threshold.

In a possible implementation, the interference measurement method further includes: The interference device receives first information, where the first information includes at least one adjustment indication, and each adjustment indication indicates the interference device to adjust one parameter of the interference measurement signal.

In a possible implementation, the first information indicates the interference device to adjust the parameter of the interference measurement signal and/or a resource occupied by the interference measurement signal, the parameter of the interference measurement signal includes at least one of signal power, signal phase, or signal amplitude, and the resource includes at least one of a time domain resource, a frequency domain resource, or a port resource.

The interference measurement method further includes: The interference device adjusts, based on the first information, the parameter of the interference measurement signal and/or the resource occupied by the interference measurement signal.

It should be noted that specific implementations and beneficial effects of this aspect are similar to some implementations of the first aspect. For details, refer to the specific implementations and beneficial effects of the first aspect. Details are not described herein again.

According to a third aspect, an embodiment of this application provides an apparatus. The apparatus may be the sensing device in the foregoing implementations, or may be a chip in the sensing device. The apparatus may include a processing module and a transceiver module. When the apparatus is the sensing device, the processing module may be a processor, and the transceiver module may be a transceiver. The sensing device may further include a storage module, and the storage module may be a memory. The storage module is configured to store instructions, and the processing module executes the instructions stored in the storage module, to cause the sensing device to perform the method according to any one of the first aspect or the implementations of the first aspect. When the apparatus is the chip in the sensing device, the processing module may be a processor, and the transceiver module may be an input/output interface, a pin, a circuit, or the like. The processing module executes instructions stored in a storage module, to cause the sensing device to perform the method according to any one of the first aspect or the implementations of the first aspect. The storage module may be a storage module (for example, a register or a cache) in the chip, or may be a storage module (for example, a read-only memory or a random access memory) that is in the sensing device and that is located outside the chip.

According to a fourth aspect, an embodiment of this application provides an apparatus. The apparatus may be the interference device in the foregoing implementations, or may be a chip in the interference device. The apparatus may include a processing module and a transceiver module. When the apparatus is the interference device, the processing module may be a processor, and the transceiver module may be a transceiver. The interference device may further include a storage module, and the storage module may be a memory. The storage module is configured to store instructions, and the processing module executes the instructions stored in the storage module, to cause the interference device to perform the method according to any one of the second aspect or the implementations of the second aspect. When the apparatus is the chip in the interference device, the processing module may be a processor, and the transceiver module may be an input/output interface, a pin, a circuit, or the like. The processing module executes instructions stored in a storage module, to cause the interference device to perform the method according to any one of the second aspect or the implementations of the second aspect. The storage module may be a storage module (for example, a register or a cache) in the chip, or may be a storage module (for example, a read-only memory or a random access memory) that is in the interference device and that is located outside the chip.

According to a fifth aspect, this application provides an apparatus. The apparatus may be an integrated circuit chip. The integrated circuit chip includes a processor. The processor is coupled to a memory. The memory is configured to store a program or instructions. When the program or the instructions are executed by the processor, the apparatus is caused to perform the method according to any implementation of the foregoing aspects.

According to a sixth aspect, an embodiment of this application provides a computer program product including instructions. When the instructions are run on a computer, the computer is caused to perform the method according to any implementation of the foregoing aspects.

According to a seventh aspect, an embodiment of this application provides a computer-readable storage medium including instructions. When the instructions are run on a computer, the computer is caused to perform the method according to any implementation of the foregoing aspects.

According to an eighth aspect, an embodiment of this application provides a communication system. The communication system includes the sensing device according to any one of the first aspect or the implementations of the first aspect and the interference device according to any one of the second aspect or the implementations of the second aspect.

### BRIEF DESCRIPTION OF DRAWINGS

FIG. 1 is an example diagram of an application scenario of an interference measurement method according to this application;
FIG. 2 is a flowchart of an interference measurement method according to this application;
FIG. 3A is an example diagram in which a measurement dimension is angle measurement according to this application;
FIG. 3B is another example diagram in which a measurement dimension is angle measurement according to this application;
FIG. 4 is another flowchart of an interference measurement method according to this application;
FIG. 5 is another flowchart of an interference measurement method according to this application;
FIG. 6 is another flowchart of an interference measurement method according to this application;
FIG. 7 is a diagram of an apparatus according to this application; and
FIG. 8 is another diagram of an apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the terms termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification generally indicates an "or" relationship between the associated objects. In this specification, "at least one of the following" or a similar expression thereof represents any combination of the listed items. For example, at least one of A, B, and (or) C may represent the following six cases: Only A exists, only B exists, only C exists, both A and B exist, both B and C exist, both A and C exist, and both A, B, and C exist, where A, B, and C may be singular or plural.

An interference measurement method provided in this application is mainly applied to interference measurement in sensing scenarios. For example, before a sensing device performs sensing measurement on a target object or during the sensing measurement of the sensing device, the sensing device measures interference caused by an interference device to the sensing device. The sensing scenario mainly relates to the sensing device, the interference device, and the target object. The sensing device may be an access network device, a terminal device, or another device or apparatus that can implement a sensing measurement function via a radio signal. The interference device may be an access network device, a terminal device, or another device that can transmit a radio signal and that may cause interference to another communication apparatus. The target object may be an uncrewed aerial vehicle, a vehicle, a building, a roadside apparatus, or the like.

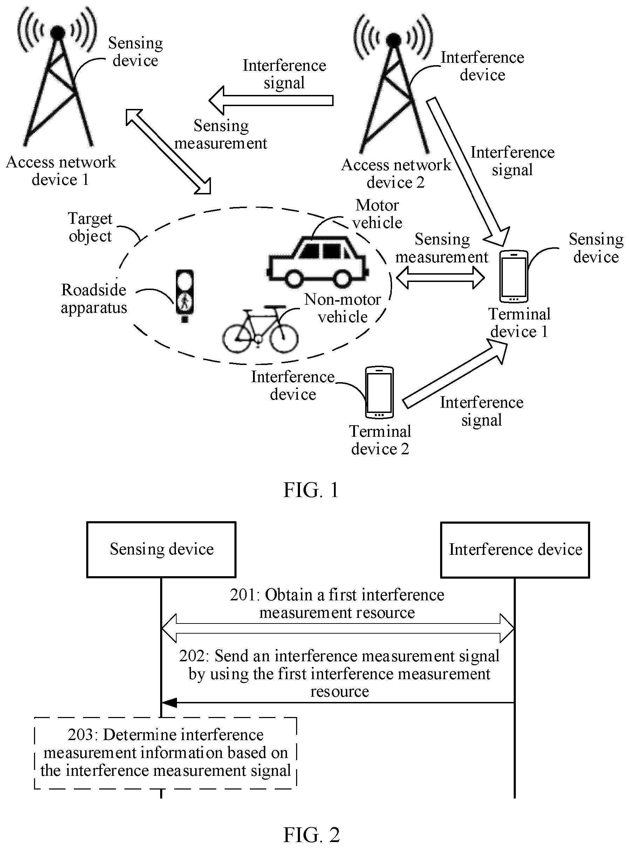

For example, FIG. 1 is an example diagram of a sensing scenario. As shown in FIG. 1, a sensing device may be an access network device 1. The access network device 1 performs sensing measurement on a target object, for example, a roadside apparatus or a vehicle, and an interference device that may cause interference to the access network device 1 is an access network device 2. For another example, the sensing device may be a terminal device 1. The terminal device 1 performs sensing measurement on the target object, for example, a roadside apparatus or a vehicle, and the interference device that may cause interference to the terminal device 1 may be the access network device 2, or may be a terminal device 2.

For example, the sensing device and/or the interference device may be a terminal device and/or an access network device in an 5G NR (5G New Radio) system, a sixth generation mobile information technology (the 6th generation mobile communication technology, 6G) system, and a subsequent evolved standard. Communication between the sensing device and the interference device may be cellular network communication, or may be proximity communication (proximity communication, PC5). This is not limited in this application. For example, in FIG. 1, the terminal device 1 used as the sensing device and the access network device 2 used as the interference device communicate with each other via a cellular network. For another example, in FIG. 1, the terminal device 1 used as the sensing device and the terminal device 2 used as the interference device communicate with each other via PC5.

The terminal device includes a device that provides voice and/or data connectivity for a user. For example, the terminal device may include a handheld device having a wireless connection function, or a processing device connected to a wireless modem. In cellular network communication, the terminal device may communicate with a radio access network (radio access network, RAN) through a Uu interface, and communicate with a core network (for example, a 5th generation core network (5th generation core, 5GC)) through a RAN. Optionally, in a PC5 communication scenario, the terminal device supports a direct communication interface (that is, a PC5 interface), and can communicate, through the PC5 interface, with another terminal device that supports the PC5 interface. The terminal device may also be referred to as a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a mobile (mobile) console, a remote station (remote station), an access point (access point, AP), a remote terminal device (remote terminal), an access terminal device (access terminal), a user terminal device (user terminal), a user agent (user agent), a user device (user device), or the like. In addition, the terminal device may be a mobile phone (mobile phone), a tablet computer (Pad), a computer having a wireless transceiver function, a virtual reality (virtual reality, VR) device, an augmented reality (augmented reality, AR) device, or an extended reality (extended reality, XR) service terminal. In addition, the terminal device may alternatively be an internet of things (internet of things, IOT) terminal, for example, a wireless terminal in industrial control (industrial control), a wireless terminal in self-driving (self-driving), a wireless terminal in remote surgery (remote medical surgery), a wireless terminal in smart grid (smart grid), a wireless terminal in transportation safety (transportation safety), a wireless terminal in smart city (smart city), or a wireless terminal in smart home (smart home).

In addition, the access network device may be any device having a wireless transceiver function, and may be configured to be responsible for a function related to an air interface, for example, a radio link maintenance function, a radio resource management function, and some mobility management functions. In addition, the access network device may be further configured with a baseband unit (baseband unit, BBU), and has a baseband signal processing function. For example, the access network device may be an access network device (radio access network, RAN) that currently provides a service to the terminal device. Currently, some common examples of the access network device are a NodeB (NodeB, NB), an evolved NodeB (evolved NodeB, eNB or eNodeB), a next generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), a home base station (for example, a home evolved NodeB (home evolved NodeB) or a home NodeB (home NodeB, HNB)), and the like. In addition, in a network structure like a cloud access network (cloud radio access network, CloudRAN) or an open access network (open radio access network, ORAN), the access network device may include at least one of a central unit (central unit, CU) (also referred to as a control unit), a distributed unit (distributed unit, DU), and a radio unit (radio unit, RU). A RAN device including the CU and the DU splits protocol layers of a gNB in an NR system. Functions of a part of protocol layers are centrally controlled by the CU, functions of a part or all of remaining protocol layers are distributed in the DU, and the CU centrally controls the DU.

It should be understood that, in actual application, the sensing device and the interference device may be implemented by using any one of the foregoing examples. In this embodiment and subsequent embodiments, only the sensing device and the interference device are used as an example for description.

Interference in the sensing scenarios is mainly caused by overlapping of sensing signals of different users in one or more measurement dimensions, resulting in mutual influence between different sensing signals and ultimately degrading sensing performance. Therefore, to measure the interference in the sensing scenarios, the interference needs to be defined and measured in dimensions other than a time domain, a frequency domain, and a spatial domain with reference to a sensing requirement. In view of this, this application provides an interference measurement method and a related apparatus, to measure an interference level to sensing in sensing scenarios, so as to improve accuracy and efficiency of interference measurement in the sensing scenarioss.

The following describes a main procedure of the interference measurement method provided in this application with reference to FIG. 2. The interference measurement method may be performed by a sensing device and an interference device, or may be performed by a component (for example, a component like a processor, a chip, or a chip system) of the sensing device and the interference device. The following uses an example in which the interference measurement method is performed by the sensing device and the interference device for description. As shown in FIG. 2, the interference measurement method includes the following steps.

Step 201: The sensing device obtains a first interference measurement resource; and correspondingly, the interference device obtains the first interference measurement resource.

The first interference measurement resource is a resource for interference measurement in sensing scenarios. It may be understood that the first interference measurement resource is used to transmit an interference measurement signal in the sensing scenarios. For example, before or during sensing measurement of the sensing device, the sensing device and the interference device obtain the first interference measurement resource to avoid interference affecting the sensing measurement, so that the interference device can send the interference measurement signal by using the first interference measurement resource, and the sensing device can receive the interference measurement signal by using the first interference measurement resource.

The first interference measurement resource is related to a measurement dimension of the sensing measurement of the sensing device. It may be understood that a time domain feature, a frequency domain feature, or a spatial domain feature of the first interference measurement resource matches the measurement dimension of the sensing measurement. It may also be understood that the interference measurement signal transmitted on the first interference measurement resource has a high probability of causing interference to the sensing measurement of the sensing device in the measurement dimension.

Optionally, the measurement dimension of the sensing measurement includes any one of the following: range measurement; velocity measurement; angle measurement; imaging measurement; joint range-velocity measurement; joint range-angle measurement; joint velocity-angle measurement; or joint range-velocity-angle measurement.

It should be understood that, for different measurement dimensions, the first interference measurement resource has different time domain features, frequency domain features, or spatial domain features. Brief examples are provided below for description.

In an example, if the measurement dimension is the range measurement, a frequency domain bandwidth of the first interference measurement resource needs to meet a constraint. For example, the frequency domain bandwidth of the first interference measurement resource is greater than a first threshold. It may be understood that, when the sensing device measures whether there is interference in a range dimension, the first interference measurement resource is configured to have a large frequency domain bandwidth, so that the sensing device obtains a high range resolution during interference measurement, to more accurately detect whether there is interference for the sensing device, that is, improve accuracy of interference measurement in a range sensing scenario.

In another example, if the measurement dimension is the velocity measurement, the time domain feature of the first interference measurement resource needs to meet a constraint. For example, duration of the first interference measurement resource in time domain is greater than a second threshold and/or a time domain repetition period is less than a third threshold. It may be understood that, when the sensing device measures whether there is interference in a velocity dimension, the first interference measurement resource is configured to have long duration and a small time domain repetition interval, so that the sensing device obtains a high velocity resolution and a large velocity measurement range during interference measurement, to improve accuracy of interference measurement in a velocity sensing scenario.

In another example, if the measurement dimension is the angle measurement, the spatial domain feature of the first interference measurement resource needs to meet a constraint. The spatial domain feature includes an antenna port feature. For example, a quantity of antenna ports involved by the first interference measurement resource is greater than a fourth threshold. It may be understood that, when the sensing device measures whether there is interference in an angle dimension, the first interference measurement resource is configured to involve as many antenna ports as possible, so that the sensing device obtains a higher angle resolution during interference measurement, to improve accuracy of interference measurement in an angle sensing scenario.

In another example, if the measurement dimension is the imaging measurement, a frequency domain bandwidth and a spatial domain feature of the first interference measurement resource need to meet constraints. The spatial domain feature includes an antenna port feature. For example, the frequency domain bandwidth of the first interference measurement resource is greater than a fifth threshold, and/or a quantity of antenna ports involved by the first interference measurement resource is greater than a sixth threshold. It may be understood that, when the sensing device measures whether there is interference in an imaging dimension, the first interference measurement resource is configured to have a large bandwidth and involve a large quantity of antenna ports, so that the sensing device obtains higher range and angle resolutions during interference measurement, to obtain a higher imaging resolution and improve accuracy of interference measurement in an imaging sensing scenario. In another example, if the measurement dimension is the joint range-velocity measurement, that is, the sensing measurement includes both range measurement and velocity measurement, the first interference measurement resource needs to meet both a constraint on the range measurement and a constraint on the velocity measurement. For example, both a frequency domain bandwidth and a time domain feature of the first interference measurement resource need to meet constraints. For details, refer to the example in which the measurement dimension is range and the example in which the measurement dimension is velocity.

In another example, if the measurement dimension is the joint range-angle measurement, that is, the sensing measurement includes both range measurement and angle measurement, the first interference measurement resource needs to meet both a constraint on the range measurement and a constraint on the angle measurement. For example, both a frequency domain bandwidth and a spatial domain feature of the first interference measurement resource need to meet constraints. For details, refer to the example in which the measurement dimension is range and the example in which the measurement dimension is angle.

In another example, if the measurement dimension is the joint velocity-angle measurement, that is, the sensing measurement includes both velocity measurement and angle measurement, the first interference measurement resource needs to meet both a constraint on the velocity measurement and a constraint on the angle measurement. For example, both a time domain feature and a spatial domain feature of the first interference measurement resource need to meet constraints. For details, refer to the example in which the measurement dimension is velocity and the example in which the measurement dimension is angle.

In another example, if the measurement dimension is the joint range-velocity-angle measurement, that is, the sensing measurement includes all of range measurement, velocity measurement, and angle measurement, the first interference measurement resource needs to meet all of a constraint on the range measurement, a constraint on the velocity measurement, and a constraint on the angle measurement. For example, all of a frequency domain bandwidth, a time domain feature, and a spatial domain feature of the first interference measurement resource need to meet constraints. For details, refer to the example in which the measurement dimension is range, the example in which the measurement dimension is velocity, and the example in which the measurement dimension is angle.

It should be understood that, in actual application, for a specific measurement dimension, there may be other constraints in time domain, frequency domain, or spatial domain for the first interference measurement resource. Examples are not listed one by one in this application.

Optionally, the first interference measurement resource is related to an interference measurement range, and the interference measurement range is an effective measurement range of the sensing measurement in the measurement dimension. It may be understood that the first interference measurement resource is not only related to the measurement dimension of the sensing measurement, but also related to the effective measurement range of the sensing measurement in the measurement dimension.

Optionally, the interference measurement range indicates a range in which interference is not tolerable for the sensing measurement. It may be understood that, when projection of the interference measurement signal in the measurement dimension having undergone sensing processing falls within the interference measurement range, the interference measurement signal causes interference to the sensing measurement; or when the projection of the interference measurement signal in the measurement dimension having undergone sensing processing does not fall within the interference measurement range, the interference measurement signal does not cause interference to the sensing measurement.

For example, if the measurement dimension is the range measurement, the interference measurement range is an effective measurement range in the range dimension, and the first interference measurement resource is related to a range length of the effective measurement range in the range dimension. For example, if the measurement dimension is the range measurement, and the range length of the interference measurement range is h, the time domain repetition period of the first interference measurement resource is greater than c/h (where c is the speed of light). For example, the interference measurement range is 0 m to 1000 m, the range length of the interference measurement range is 1000 m, and the time domain repetition period of the first interference measurement resource is greater than c/(1000 m). For example, if the measurement dimension is the velocity measurement, the interference measurement range is an effective measurement range in the velocity dimension, and the first interference measurement resource is related to a range length of the effective measurement range in the velocity dimension. For example, if the measurement dimension is the velocity measurement, and the range length of the interference measurement range is 2v, the time domain repetition period of the first interference measurement resource is less than λ/(2v) (where λ is a carrier wavelength). For example, the interference measurement range is -30 m/s to +30 m/s, the range length of the interference measurement range is 2×30 m/s, and the time domain repetition period of the first interference measurement resource is less than λ/(2×30 m/s) (where λ is the carrier wavelength). Similarly, when the measurement dimension is the angle measurement, the imaging measurement, and the joint measurement, the time domain feature, the frequency domain feature, or the spatial domain feature of the first interference measurement resource is also affected by the interference measurement range in the measurement dimension. Examples are not listed herein one by one.

It should be noted that the first interference measurement resource may be a reused interference measurement resource (interference measurement resource, IMR) in a conventional technology, or may be a resource that is newly defined for the sensing scenario and that is used for interference measurement. This is not limited in this application. For example, if the first interference measurement resource is the reused IMR in the conventional technology, the first interference measurement resource may be a channel state information reference signal (channel state information reference signal, CSI-RS) resource or a demodulation reference signal (demodulation reference signal, DM-RS) resource. The CSI-RS resource includes a non-zero power (non-zero power, NZP) CSI-RS resource and a zero power (zero power, ZP) CSI-RS resource.

In addition, the sensing device and the interference device may separately obtain the first interference measurement resource, or may negotiate via signaling exchange to determine the first interference measurement resource. The following separately provides descriptions.

In a possible implementation, the sensing device and the interference device separately obtain the first interference measurement resource. For example, the sensing device receives pre-configured first configuration information or first configuration information from another communication apparatus. The first configuration information is used to configure the first interference measurement resource. For another example, the interference device receives pre-configured second configuration information or second configuration information from another communication apparatus. The second configuration information is used to configure the first interference measurement resource.

In another possible implementation, the sensing device and the interference device determine the first interference measurement resource through signaling exchange. In other words, the first interference measurement resource is an interference measurement resource determined by the sensing device and the interference device through negotiation via signaling exchange.

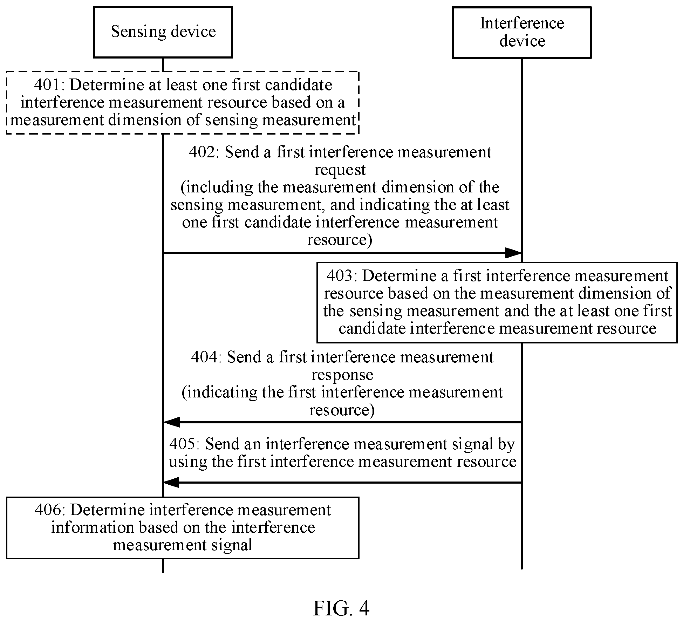

In an implementation, the sensing device triggers negotiation to determine the first interference measurement resource. For example, the sensing device sends at least one first candidate interference measurement resource to the interference device, and the interference device determines the first interference measurement resource based on a capability of the interference device and with reference to the at least one candidate interference measurement resource. For details, refer to related descriptions in the following embodiment corresponding to FIG. 4. Details are not described herein again.

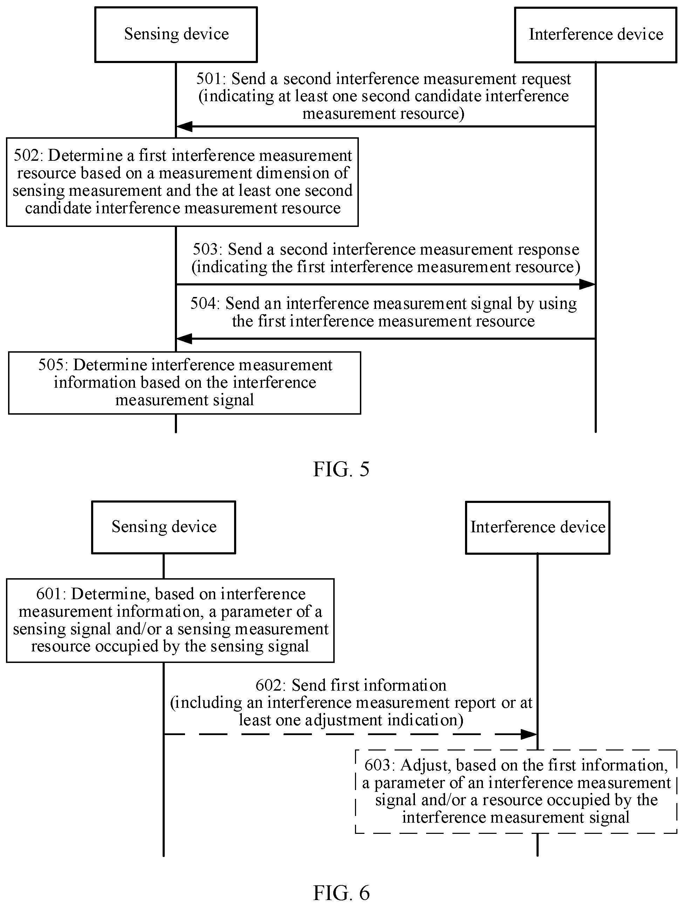

In another implementation, the interference device triggers negotiation to determine the first interference measurement resource. For example, the interference device provides at least one second candidate interference measurement resource to the sensing device, and the sensing device determines the first interference measurement resource based on information such as the measurement dimension of the sensing measurement and with reference to the at least one second candidate interference measurement resource. For details, refer to related descriptions in the following embodiment corresponding to FIG. 5. Details are not described herein again.

Step 202: The interference device sends the interference measurement signal by using the first interference measurement resource, and correspondingly, the sensing device receives, by using the first interference measurement resource, the interference measurement signal sent by the interference device.

The interference measurement signal is generally a signal sent by the interference device by using the first interference measurement resource. The interference measurement signal may be a signal newly defined by the interference device, may be a working signal of the interference device, or may be a signal pre-configured in the interference device. This is not limited in this application. When the measurement dimension associated with the first interference measurement resource differs, the interference measurement signal may differ.

In a possible implementation, if the sensing device and the interference device separately obtain the first interference measurement resource, when interference measurement needs to be performed, the sensing device sends an instruction to the interference device, to trigger the interference device to send the interference measurement signal on the first interference measurement resource; or the interference device sends the interference measurement signal on the first interference measurement resource based on a pre-configured trigger period or trigger event.

In another possible implementation, if the sensing device and the interference device negotiate through signaling exchange to determine the first interference measurement resource, when the interference device notifies the sensing device that the first interference measurement resource has been selected or when the interference device receives an indication from the sensing device that the first interference measurement resource has been selected, the interference device triggers sending of the interference measurement signal by using the first interference measurement resource. For details, refer to related descriptions in the following embodiment corresponding to FIG. 4 or FIG. 5. Details are not described herein again.

Step 203: The sensing device determines interference measurement information based on the interference measurement signal.

In this embodiment, step 203 is an optional step. It should be understood that the sensing device may calculate the interference measurement information once each time the sensing device receives the interference measurement signal. Alternatively, the sensing device may trigger determining of the interference measurement information based on at least one interference measurement signal when a quantity of consecutive times that the interference measurement signal is received reaches a threshold, or waiting duration for receiving the interference measurement signal reaches a threshold. This is not limited in this application.

Specifically, the sensing device performs sensing processing on the interference measurement signal based on the measurement dimension of the sensing measurement, and outputs the interference measurement information. The interference measurement information indicates a status of interference caused by the interference measurement signal to the sensing device in the sensing measurement dimension.

It should be understood that, because the measurement dimension associated with the first interference measurement resource differs, the interference measurement signal received by the sensing device differs, and therefore, the interference measurement information determined by the sensing device differs.

For example, if the measurement dimension of the sensing measurement is the range measurement, the sensing device performs pulse compression processing in a fast time (fast time) dimension (that is, the range dimension) on the received interference measurement signal, to obtain interference measurement information in the range dimension. For example, if the measurement dimension of the sensing measurement is the velocity measurement, the sensing device performs matched filtering processing in a slow time (slow time) dimension (that is, the velocity dimension) on the received interference measurement signal, to obtain interference measurement information in the velocity dimension or a Doppler dimension. For example, if the measurement dimension of the sensing measurement is the angle measurement, the sensing device performs processing such as matched filtering or super-resolution estimation in an array angle dimension on the received interference measurement signal, to obtain interference measurement information in the angle dimension. For example, if the measurement dimension of the sensing measurement is the imaging measurement, the sensing device performs imaging processing (for example, back projection (back projection, BP) algorithm processing or wave number domain algorithm processing) on the received interference measurement signal, to obtain interference measurement information in an imaging spatial dimension.

Optionally, the interference measurement information includes an interference measurement value of the interference measurement signal in the measurement dimension. Optionally, the interference measurement information includes at least one of the following interference measurement values:
average power of the interference measurement signal in the measurement dimension having undergone sensing processing; peak power of the interference measurement signal in the measurement dimension having undergone sensing processing; or a ratio of power of the interference measurement signal having undergone sensing processing to preset power.

Optionally, the interference measurement information includes an interference measurement value of the interference measurement signal within the interference measurement range in the measurement dimension. Optionally, the interference measurement value indicates an average level of interference or a highest level of interference within the interference measurement range. In an example, the interference measurement value may be an average value or a maximum value measured within the interference measurement range. For example, the measurement dimension of the sensing measurement is the range measurement, and the interference measurement information includes an average amplitude value or a maximum amplitude value of a pulse compression result determined by the sensing device within the interference measurement range. In another example, the sensing device can perform quantization processing on an interference measurement result (for example, a pulse compression result in the range dimension) according to a predefined quantization rule, and the output interference measurement information includes an index of a quantized amplitude value of the pulse compression result.

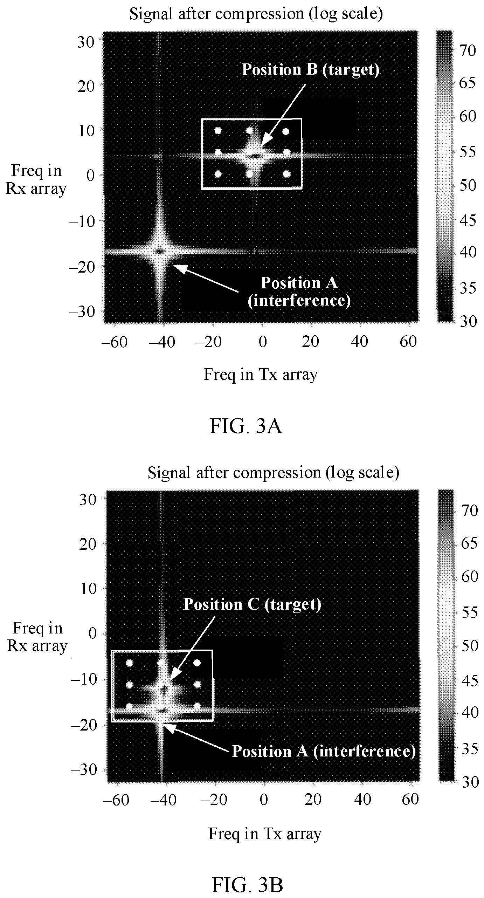

For example, FIG. 3A and FIG. 3B are examples in which a measurement dimension of sensing measurement is angle measurement. In FIG. 3A and FIG. 3B, a horizontal axis represents an angle of an angular spectrum corresponding to a transmit antenna array, and a vertical axis represents an angle of an angular spectrum corresponding to a receive antenna array. A position A in FIG. 3A represents an angular spectrum obtained by performing sensing processing on an interference signal, a position B in FIG. 3A represents an angular spectrum obtained by performing sensing processing on a target signal, and a range enclosed by a white box line is an interference measurement range in a two-dimensional angular domain. As shown in FIG. 3A, both the target signal and the interference signal having undergone sensing processing have a large amplitude response in the two-dimensional angular domain. Because the target signal and the interference signal having undergone sensing processing do not overlap in the two-dimensional angular domain, that is, the angular spectrum at the position B does not overlap the angular spectrum at the position A, and the angular spectrum at the position A is not even within the interference measurement range, the interference signal does not cause effective interference to the target signal. For a case shown in FIG. 3A, interference suppression does not need to be performed. As shown in FIG. 3B, as the target signal changes, a position of the target signal having undergone sensing processing in the two-dimensional angular domain moves to a position C, and the interference measurement range also changes with movement of the position C. A position (that is, the position A) of the interference signal having undergone sensing processing in the two-dimensional angular domain is within the interference measurement range. The target signal and the interference signal having undergone sensing processing nearly overlap in the two-dimensional angular domain, that is, the position C and the position A nearly overlap. In this case, the interference signal causes effective interference to the target signal, and interference suppression needs to be performed.

Optionally, the sensing device may determine at least one reference point in the interference measurement range. The sensing device determines, based on the interference measurement signal, an interference measurement value at a position of the reference point. In this case, the interference measurement information output by the sensing device includes the interference measurement value at the position of the reference point.

For example, FIG. 3A and FIG. 3B are still used as examples. Ranges enclosed by white box lines are interference measurement ranges in the two-dimensional angular domain, and white points are reference points. When calculating the interference measurement value, the sensing device may calculate only an interference measurement value of one or more reference points shown in FIG. 3A or FIG. 3B, and does not necessarily perform calculation for the entire interference measurement range. This helps reduce calculation overheads of the sensing device.

In this embodiment, because the first interference measurement resource for transmission of the interference measurement signal between the sensing device and the interference device is related to the measurement dimension of the sensing measurement of the sensing device, the interference measurement signal can reflect interference caused by the interference device to the sensing device in the measurement dimension of the sensing measurement. This helps the sensing device more accurately detect impact of the interference device on the sensing device, and improves accuracy of interference measurement in sensing scenarios. In addition, the first interference measurement resource is also related to the interference measurement range, and the interference measurement range is an effective measurement range of the sensing measurement in the measurement dimension. This helps the sensing device determine whether the sensing device is affected by the interference device within the interference measurement range, and further improves accuracy of the interference measurement in the sensing scenarios.

The following describes, with reference to FIG. 4, an embodiment of the interference measurement method provided in this application. In this embodiment, a sensing device initiates interference measurement, that is, the sensing device triggers negotiation with an interference device to determine a first interference measurement resource. As shown in FIG. 4, the sensing device and the interference device mainly perform the following steps.

Step 401: The sensing device determines at least one first candidate interference measurement resource based on a measurement dimension of sensing measurement.

The first candidate interference measurement resource is a candidate resource used to determine the first interference measurement resource. Each of the at least one first candidate interference measurement resource is related to the measurement dimension of the sensing measurement. For explanations of the measurement dimension of the sensing measurement and the first interference measurement resource, refer to related descriptions in step 201 described above. Details are not described herein again.

In a possible implementation, the sensing device determines the at least one first candidate interference measurement resource based on the measurement dimension of the sensing measurement and a constraint on a feature of an interference measurement resource corresponding to the measurement dimension.

For example, the measurement dimension is velocity measurement, and a time domain feature of an interference measurement resource for interference measurement in a velocity dimension needs to meet a constraint. For example, the constraint is that duration of the interference measurement resource in time domain is greater than a second threshold and/or a time domain repetition period is less than a third threshold. The sensing device determines at least one time-frequency resource that meets the foregoing constraint as the first candidate interference measurement resource. The foregoing constraint may be pre-configured in the sensing device, or may be determined by the sensing device based on an algorithm. This is not limited in this application.

In another possible implementation, the sensing device determines the at least one first candidate interference measurement resource based on the measurement dimension of the sensing measurement and a first correspondence. The first correspondence includes at least one measurement dimension and at least one interference measurement resource corresponding to each measurement dimension. The first correspondence may be specified in a protocol, or may be pre-configured. This is not limited in this application.

For example, the first correspondence may be shown in Table 1-1 below.

**Table 1-1**

| Measurement dimension of sensing measurement | Interference measurement resource |
|---|---|
| Distance measurement | Resource 1 and resource 2 |
| Velocity measurement | Resource 3, resource 4, and resource 5 |
| Angle measurement | Resource 6 and resource 7 |
| Imaging measurement | Resource 8 |

In an example shown in Table 1-1, if the sensing measurement dimension is the range measurement, the sensing device may determine, based on the sensing measurement dimension and the first correspondence, that the resource 1 and/or the resource 2 are/is first candidate interference measurement resources/the first candidate interference measurement resource; or if the sensing measurement dimension is the velocity measurement, the sensing device may determine, based on the sensing measurement dimension and the first correspondence, that at least one of the resource 3, the resource 4, or the resource 5 is the first candidate interference measurement resource. Other examples are similar, and details are not described herein again.

Optionally, when determining the at least one first candidate interference measurement resource, the sensing device not only refers to the measurement dimension of the sensing measurement, but also refers to an interference measurement range or a sensing service type. For explanations of the interference measurement range, refer to related descriptions in step 201 described above. Details are not described herein again. The following separately provides descriptions.

In a possible implementation, the sensing device determines the at least one first candidate interference measurement resource based on the measurement dimension of the sensing measurement and the interference measurement range. The measurement dimension of the sensing measurement is used to determine a constraint on a feature of an interference measurement resource corresponding to the measurement dimension, and the interference measurement range is used to determine a threshold of the constraint.

For example, if the measurement dimension of the sensing measurement is velocity measurement, a time domain feature of an interference measurement resource corresponding to the velocity measurement dimension needs to meet a constraint. For example, the constraint is that a time domain repetition period of the interference measurement resource is less than a specific threshold. In addition, the interference measurement range is used to determine the foregoing threshold. For example, if the interference measurement range is -v m/s to +v m/s (where v is a non-zero real number), the time domain repetition period of the interference measurement resource is less than λ/(2v) (where λ is a carrier wavelength), that is, the threshold is λ/(2v). For example, if the measurement dimension of the sensing measurement is the velocity measurement, and the interference measurement range is -v m/s to +v m/s, the sensing device selects at least one time-frequency resource from a time-frequency resource whose time domain repetition period is less than λ/(2v) as the at least one first candidate interference measurement resource.

In another possible implementation, the sensing device determines the at least one first candidate interference measurement resource based on the measurement dimension of the sensing measurement, the interference measurement range, a first correspondence, and a second correspondence. The first correspondence includes at least one measurement dimension and at least one interference measurement resource corresponding to each measurement dimension. The second correspondence includes at least one interference measurement range corresponding to a same measurement dimension and at least one interference measurement resource corresponding to each interference measurement range. The second correspondence may be specified in a protocol, or may be pre-configured. This is not limited in this application.

For example, the measurement dimension of the sensing measurement is velocity measurement, and the second correspondence may be shown in Table 2-1 below.

**Table 2-1**

| Measurement dimension of sensing measurement | Interference measurement range | Interference measurement resource |
|---|---|---|
| | 0.1 m/s to 1 m/s | Resource 3 |
| Velocity measurement | 5 m/s to 10 m/s | Resource 4 |
| | 100 m/s to 200 m/s | Resource 5 |

For example, Table 1-1 and Table 2-1 are used. If the measurement dimension of the sensing measurement is the velocity measurement, the sensing device determines, based on the measurement dimension and the first correspondence shown in Table 1-1, that interference measurement resources suitable for the velocity measurement include the resource 3, the resource 4, and the resource 5. If the interference measurement range is 5 m/s to 10 m/s, the sensing device determines, based on the interference measurement range and the second correspondence shown in Table 2-1, that an interference measurement resource suitable for 5 m/s to 10 m/s is the resource 4, that is, the sensing device determines that the resource 4 is the first candidate interference measurement resource. It should be understood that Table 2-1 shows only the second correspondence in a case that the measurement dimension is the velocity measurement. In actual application, there is also a second correspondence for another measurement dimension. Examples are not listed one by one in this application.

It should be understood that, in actual application, an interference measurement range known by the sensing device may not completely overlap the interference measurement range in the second correspondence, but the sensing device may still determine the first candidate interference measurement resource with reference to the second correspondence. For example, the measurement dimension of the sensing measurement is the velocity measurement, and the interference measurement range is 4 m/s to 8 m/s. The sensing device determines an interference measurement resource with reference to an interference measurement range that is closest to 4 m/s to 8 m/s in the second correspondence, that is, determines, with reference to 5 m/s to 10 m/s, the resource 4 as the first candidate interference measurement resource.

In another possible implementation, the sensing device determines the at least one first candidate interference measurement resource based on the measurement dimension of the sensing measurement, the sensing service type, a first correspondence, and a third correspondence. The first correspondence includes at least one measurement dimension and at least one interference measurement resource corresponding to each measurement dimension. The third correspondence includes at least one sensing service type corresponding to a same measurement dimension and at least one interference measurement resource corresponding to each sensing service type. The third correspondence may be specified in a protocol, or may be pre-configured. This is not limited in this application.

For example, the measurement dimension of the sensing measurement is velocity measurement, and the third correspondence may be shown in Table 3-1 below.

**Table 3-1**

| Measurement dimension of sensing measurement | Sensing service type | Interference measurement resource |
|---|---|---|
| | Measuring a velocity of a non-motor vehicle | Resource 3 |
| Velocity measurement | Measuring a velocity of a motor vehicle | Resource 4 |
| | Measuring a velocity of a high-velocity train | Resource 5 |

For example, Table 1-1 and Table 3-1 are used. If the measurement dimension of the sensing measurement is the velocity measurement, the sensing device determines, based on the measurement dimension and the first correspondence shown in Table 1-1, that interference measurement resources suitable for the velocity measurement include the resource 3, the resource 4, and the resource 5. If the sensing service type is measuring a velocity of a non-motor vehicle, the sensing device determines, based on the sensing service type and the third correspondence shown in Table 3-1, that an interference measurement resource suitable for measuring a velocity of a non-motor vehicle is the resource 3, that is, the sensing device determines the resource 3 as the first candidate interference measurement resource. It should be understood that Table 3-1 shows only the third correspondence in a case that the measurement dimension is the velocity measurement. In actual application, there is also a third correspondence for another measurement dimension. Examples are not listed one by one in this application.

It should be noted that step 401 is an optional step. For example, at least one first candidate interference measurement resource is pre-configured in the sensing device. Each time the sensing device needs to perform measurement, the sensing device may directly trigger execution of step 402 without performing step 401.

Step 402: The sensing device sends a first interference measurement request, and correspondingly, the interference device receives the first interference measurement request.

In an example, if the sensing device and the interference device can communicate with each other, the sensing device sends the first interference measurement request to the interference device, and correspondingly, the interference device receives the first interference measurement request from the sensing device. For example, both the sensing device and the interference device are access network devices (for example, TRPs), and the first interference measurement request is transmitted between the sensing device and the interference device through an Xn interface. For another example, both the sensing device and the interference device are terminal devices, and the first interference measurement request is transmitted between the sensing device and the interference device through a PC5 interface. For another example, the sensing device is a terminal device, and the interference device is an access network device; or the sensing device is an access network device, and the interference device is a terminal device. In this case, the first interference measurement request is transmitted between the sensing device and the interference device through a Uu interface.

In another example, if the sensing device and the interference device cannot directly communicate with each other, the sensing device may forward the first interference measurement request to the interference device via a coordination device, and correspondingly, the interference device receives the first interference measurement request from the sensing device via the coordination device. For example, both the sensing device and the interference device are terminal devices and do not support PC5 communication, and the coordination device is an access network device. The first interference measurement request is forwarded between the terminal device serving as the sensing device and the terminal device serving as the interference device via the access network device. For another example, both the sensing device and the interference device are access network devices, there is no available communication interface between the sensing device and the interference device, and the coordination device is another access network device. The coordination device separately communicates with the sensing device and the interference device through an Xn interface, so that the first interference measurement request is forwarded between the access network device serving as the sensing device and the access network device serving as the interference device via the access network device serving as the coordination device.

It should be understood that the sensing device may send the first interference measurement request to one interference device, or may send the first interference measurement request to a plurality of interference devices. This is not limited in this application. In addition, when the sensing device sends the first interference measurement request to the plurality of interference devices, the sensing device may broadcast the first interference measurement request, to reduce signaling overheads.

The first interference measurement request includes the measurement dimension of the sensing measurement and first resource indication information. The first resource indication information indicates the at least one first candidate interference measurement resource, to be specific, the at least one first candidate interference measurement resource determined by the sensing device based on information such as the measurement dimension. After the interference device receives the first interference measurement request, the interference device can learn, based on the measurement dimension, that the first candidate interference measurement resource is related to the measurement dimension.

For example, if the first interference measurement request includes information indicating range measurement and information indicating a resource 1 and a resource 2, the interference device learns, based on the received first interference measurement request, that the sensing device requests to measure interference in a range measurement dimension, and expects the interference device to send an interference measurement signal on the resource 1 or the resource 2.

Optionally, the first resource indication information may be an index of each of the at least one first candidate interference measurement resource. For example, if the sensing device and the interference device pre-agree on indexes of some resources through pre-configuration or signaling negotiation before performing step 402, the sensing device may indicate, to the interference device by using the indexes of the resources, which resources are first candidate interference measurement resources.

Optionally, the first interference measurement request further includes the interference measurement range, so that the interference device takes the interference measurement range into consideration in a subsequent process of determining the first interference measurement resource.

Step 403: The interference device determines the first interference measurement resource based on the measurement dimension of the sensing measurement and the at least one first candidate interference measurement resource.

In a possible implementation, the interference device selects, from the at least one first candidate interference measurement resource, a resource supported by the interference device as the first interference measurement resource, that is, the first interference measurement resource is a subset of the at least one first candidate interference measurement resource. For example, the sensing device provides three first candidate interference measurement resources, which are respectively 1 MHz, 40 ms, 10 MHz, 10 ms, and 20 MHz, 5 ms. If the interference device only supports sending a signal on a 10 MHz resource, the interference device determines 10 MHz, 10 ms as the first interference measurement resource.

Optionally, the interference device may alternatively determine, from the at least one first candidate interference measurement resource with reference to the measurement dimension, a resource that is supported by the interference device and suitable for interference measurement in the measurement dimension as the first interference measurement resource. For example, the sensing device provides four first candidate interference measurement resources, which are respectively 1 MHz, 40 ms, 10 MHz, 10 ms, 10 MHz, 40 ms, and 20 MHz, 5 ms, for interference measurement in a range measurement dimension. If the interference device only supports sending a signal on a 10 MHz resource, and 10 MHz, 10 ms is more suitable for interference measurement in the range measurement dimension than 10 MHz, 40 ms, the interference device determines 10 MHz, 10 ms as the first interference measurement resource.

Optionally, if the first interference measurement request includes the interference measurement range, the interference device may further refer to the interference measurement range when determining the first interference measurement resource. For example, the sensing device provides five first candidate interference measurement resources, which are respectively 1 MHz, 40 ms, 10 MHz, 10 ms, 10 MHz, 15 ms, 10 MHz, 40 ms, and 20 MHz, 5 ms, for interference measurement in a range measurement dimension. If the interference device only supports sending a signal on a 10 MHz resource, and both 10 MHz, 10 ms and 10 MHz, 15 ms are suitable for interference measurement in the range measurement dimension, the interference device selects, from 10 MHz, 10 ms and 10 MHz, 15 ms, a resource that is more likely to cause interference to an interference measurement range in the range measurement dimension as the first interference measurement resource.

It should be noted that the first interference measurement resource determined by the interference device may not belong to the at least one first candidate interference measurement resource provided by the sensing device. For example, the sensing device may not know a capability of the interference device. As a result, in the at least one first candidate interference measurement resource provided by the sensing device, there is no resource that can be used by the interference device, or there is no resource that is suitable for the measurement dimension and that is supported by the interference device. In this case, the interference device determines the first interference measurement resource based on the measurement dimension of the sensing measurement and the resource supported by the interference device. In this case, the first interference measurement resource determined by the interference device may partially overlap or not overlap at all, in time domain, frequency domain, or spatial domain, a specific first candidate interference measurement resource provided by the sensing device. This is not limited in this application.

In a possible implementation, if the interference device does not determine a suitable resource as the first interference measurement resource from the at least one first candidate interference measurement resource, the interference device determines the first interference measurement resource based on the measurement dimension of the sensing measurement and a constraint on a feature of an interference measurement resource corresponding to the measurement dimension.

For example, the measurement dimension is velocity measurement, and a time domain feature of an interference measurement resource for interference measurement in a velocity dimension needs to meet a constraint. For example, the constraint is that duration of the interference measurement resource in time domain is greater than a second threshold and/or a time domain repetition period is less than a third threshold. The interference device determines, as the first interference measurement resource, at least one time-frequency resource that meets the foregoing constraint and that is supported by the interference device. The foregoing constraint may be pre-configured in the interference device, or may be determined by the interference device based on an algorithm. This is not limited in this application.

In another possible implementation, if the interference device does not determine a suitable resource as the first interference measurement resource from the at least one first candidate interference measurement resource, and the first interference measurement request includes the interference measurement range, the interference device alternatively determines the first interference measurement resource based on the measurement dimension of the sensing measurement and the interference measurement range. The measurement dimension of the sensing measurement is used to determine a constraint on a feature of an interference measurement resource corresponding to the measurement dimension, and the interference measurement range is used to determine a threshold of the constraint.

For example, if the measurement dimension of the sensing measurement is velocity measurement, a time domain feature of an interference measurement resource corresponding to the velocity measurement dimension needs to meet a constraint. For example, the constraint is that a time domain repetition period of the interference measurement resource is less than a specific threshold. In addition, the interference measurement range is used to determine the foregoing threshold. For example, if the interference measurement range is -v m/s to +v m/s (where v is a non-zero real number), the time domain repetition period of the interference measurement resource is less than λ/(2v) (where λ is a carrier wavelength), that is, the threshold is λ/(2v). For example, if the measurement dimension of the sensing measurement is the velocity measurement, and the interference measurement range is -v m/s to +v m/s, the interference device selects, from a time-frequency resource whose time domain repetition period is less than λ/(2v), at least one time-frequency resource supported by the interference device as the first interference measurement resource.

In this step, the interference device preferentially selects the first interference measurement resource from the at least one first candidate interference measurement resource provided by the sensing device. Because the at least one first candidate interference measurement resource provided by the sensing device is related to the measurement dimension of the sensing measurement, the interference device only needs to select, from the at least one first candidate interference measurement resource, a resource supported by the interference device as the first interference measurement resource. This helps reduce complexity of determining the first interference measurement resource by the interference device, and helps reduce processing overheads of the interference device. In addition, when the interference device fails to determine the first interference measurement resource from the at least one first candidate interference measurement resource, the interference device can determine the first interference measurement resource based on the measurement dimension of the sensing measurement (and the interference measurement range). This helps ensure reliability of determining the first interference measurement resource by the interference device.

It should be noted that step 403 is an optional step. For example, if the interference device does not participate in interference measurement, the interference device does not perform step 403; or if the interference device participates in the interference measurement, the interference device performs step 403.

Step 404: The interference device sends a first interference measurement response, and correspondingly, the sensing device receives the first interference measurement response.

The first interference measurement response indicates whether the interference device participates in the interference measurement. For example, the first interference measurement response includes first indication information, one value of the first indication information indicates that the interference device participates in the interference measurement, and another value of the first indication information indicates that the interference device does not participate in the measurement. It should be understood that, if the first interference measurement response indicates that the interference device does not participate in the interference measurement, the interference device and the sensing device do not perform subsequent step 405 and step 406; or if the first interference measurement response indicates that the interference device participates in the interference measurement, the interference device and the sensing device perform subsequent step 405 and step 406. In addition, the first interference measurement response includes second resource indication information, and the second resource indication information indicates the first interference measurement resource.

Step 405: The interference device sends the interference measurement signal by using the first interference measurement resource, and correspondingly, the sensing device receives, by using the first interference measurement resource, the interference measurement signal sent by the interference device.

Step 406: The sensing device determines interference measurement information based on the interference measurement signal.

In this embodiment, step 405 and step 406 are similar to step 202 and step 203 described above. For details, refer to related descriptions in step 202 and step 203 described above. Details are not described herein again.

In this embodiment, because the sensing device provides the measurement dimension of the sensing measurement and the at least one first candidate interference measurement resource to the interference device, the interference device determines the first interference measurement resource based on the measurement dimension of the sensing measurement and the at least one first candidate interference measurement resource. Because the ultimately determined first interference measurement resource for transmission of the interference measurement signal is related to the measurement dimension of the sensing measurement of the sensing device, the interference measurement signal can reflect interference caused by the interference device to the sensing device in the measurement dimension of the sensing measurement. This helps the sensing device more accurately detect impact of the interference device on the sensing device, and improves accuracy of interference measurement in sensing scenarios. In addition, the sensing device triggers negotiation with the interference device to determine the first interference measurement resource. This helps the sensing device initiate interference measurement when interference management needs to be performed, so that the sensing device performs interference measurement as needed, thereby improving flexibility of the interference measurement.

The following describes, with reference to FIG. 5, another embodiment of the interference measurement method provided in this application. In this embodiment, an interference device initiates interference measurement, that is, the interference device triggers negotiation with a sensing device to determine a first interference measurement resource. As shown in FIG. 5, the sensing device and the interference device mainly perform the following steps.

Step 501: The interference device sends a second interference measurement request, and correspondingly, the sensing device receives the second interference measurement request.

In an example, if the interference device and the sensing device can communicate with each other, the interference device sends the second interference measurement request to the sensing device, and correspondingly, the sensing device receives the second interference measurement request from the interference device. For example, both the interference device and the sensing device are access network devices (for example, TRPs), and the second interference measurement request is transmitted between the interference device and the sensing device through an Xn interface. For another example, both the interference device and the sensing device are terminal devices, and the second interference measurement request is transmitted between the interference device and the sensing device through a PC5 interface. For another example, the interference device is a terminal device, and the sensing device is an access network device; or the interference device is an access network device, and the sensing device is a terminal device. In this case, the second interference measurement request is transmitted between the interference device and the sensing device through a Uu interface.

In another example, if the interference device and the sensing device cannot directly communicate with each other, the interference device may forward the second interference measurement request to the sensing device via a coordination device, and correspondingly, the sensing device receives the second interference measurement request from the interference device via the coordination device. For example, both the interference device and the sensing device are terminal devices and do not support PC5 communication, and the coordination device is an access network device. The second interference measurement request is forwarded between the terminal device serving as the interference device and the terminal device serving as the sensing device via the access network device. For another example, both the interference device and the sensing device are access network devices, there is no available communication interface between the interference device and the sensing device, and the coordination device is another access network device. The coordination device separately communicates with the sensing device and the interference device through an Xn interface, so that the second interference measurement request is forwarded between the access network device serving as the interference device and the access network device serving as the sensing device via the access network device serving as the coordination device.

In addition, the interference device may send the second interference measurement request to one sensing device, or may send the second interference measurement request to a plurality of sensing devices. This is not limited in this application. When the interference device sends the second interference measurement request to the plurality of sensing devices, the interference device may broadcast the second interference measurement request. For example, the interference device periodically broadcasts the second interference measurement request, to request a surrounding sensing device to cooperate in interference measurement, so that the surrounding sensing device updates interference. The interference device notifies the sensing device in batches, in a broadcast mode, to perform interference measurement. This helps improve efficiency of the interference measurement.

The second interference measurement request includes third resource indication information, and the third resource indication information indicates at least one second candidate interference measurement resource supported by the interference device. The second candidate interference measurement resource is a resource supported by the interference device, to be specific, the interference device can send, on the second candidate interference measurement resource, a working signal or a signal dedicated to interference measurement.

Optionally, the second candidate interference measurement resource is related to a measurement dimension of sensing measurement. The second interference measurement request includes the third resource indication information and the measurement dimension related to the second candidate interference measurement resource.

In a possible implementation, the at least one second candidate interference measurement resource is related to a same measurement dimension. For example, each of the at least one second candidate interference measurement resource is related to range measurement. For another example, each of the at least one second candidate interference measurement resource is related to velocity measurement. For another example, each of the at least one second candidate interference measurement resource is related to angle measurement. For another example, each of the at least one second candidate interference measurement resource is related to imaging measurement.

Optionally, the interference device may send the second interference measurement request for a plurality of times. Second candidate interference measurement resources included in second interference measurement requests sent at a same time are related to one measurement dimension, and second candidate interference measurement resources included in second interference measurement requests sent at different times are related to different measurement dimensions. For example, the interference device broadcasts second interference measurement requests at regular intervals, a second candidate interference measurement resource included in a second interference measurement request broadcast by the interference device at a first moment is related to range measurement, a second candidate interference measurement resource included in a second interference measurement request broadcast by the interference device at a second moment is related to velocity measurement, a second candidate interference measurement resource included in a second interference measurement request broadcast by the interference device at a third moment is related to angle measurement, and the like.

In this implementation, not only a capability of the interference device but also the measurement dimension of the sensing measurement has been taken into consideration when the interference device provides the second candidate interference measurement resource to the sensing device. This helps provide a more accurate candidate interference measurement resource suitable for a specific measurement dimension to the sensing device, and helps the sensing device more quickly determine a first interference measurement resource suitable for a specific measurement dimension, thereby improving efficiency of the interference measurement. In addition, for second candidate interference measurement resources in different measurement dimensions, the interference device respectively includes the second candidate interference measurement resources in different second interference measurement requests for sending, so that different second candidate interference measurement resources can be provided to the sensing device to select for different measurement dimensions. This helps the sensing device measure interference in different measurement dimensions, and improves diversity of the interference measurement.

In another possible implementation, different second candidate interference measurement resources in the at least one second candidate interference measurement resource are related to different measurement dimensions. For example, the third resource indication information included in the second interference measurement request indicates three second candidate interference measurement resources: one second candidate interference measurement resource is related to range measurement, another second candidate interference measurement resource is related to velocity measurement, and another second candidate interference measurement resource is related to angle measurement. In this example, the second interference measurement request includes three second candidate interference measurement resources and a measurement dimension related to each of the second candidate interference measurement resources.

In this implementation, the interference device may provide a plurality of second candidate interference measurement resources to the sensing device by using one second interference measurement request, and the plurality of candidate interference measurement resources are respectively suitable for a plurality of measurement dimensions. This helps the sensing device obtain the second candidate interference measurement resources for different measurement dimensions by using less signaling, facilitating subsequent initiation of interference measurement in another measurement dimension by the sensing device, and helps reduce signaling overheads. For example, if the sensing device needs to perform interference measurement in a range measurement dimension in a first time period, and needs to perform interference measurement in a velocity measurement dimension in a second time period, and the third resource indication information received by the sensing device indicates a candidate interference measurement resource 1 related to the range measurement and a candidate interference measurement resource 2 related to the velocity measurement, the sensing device may use the candidate interference measurement resource 1 for current interference measurement in the range measurement dimension, and use the candidate interference measurement resource 2 for subsequent interference measurement in the velocity measurement dimension. Therefore, signaling overheads are reduced.

Step 502: The sensing device determines the first interference measurement resource based on the measurement dimension of the sensing measurement and the at least one second candidate interference measurement resource.

The measurement dimension of the sensing measurement is a measurement dimension of sensing measurement that is being performed by the sensing device, or a measurement dimension of sensing measurement that is to be started by the sensing device.

Specifically, the sensing device selects, from the at least one second candidate interference measurement resource, a resource suitable for interference measurement in the measurement dimension, and determines the resource as the first interference measurement resource. The first interference measurement resource is a subset of the at least one second candidate interference measurement resource.

In a possible implementation, the sensing device determines the first interference measurement resource from the at least one second candidate interference measurement resource based on the measurement dimension of the sensing measurement and a constraint on a feature of an interference measurement resource corresponding to the measurement dimension.

For example, the measurement dimension is velocity measurement, and a time domain feature of an interference measurement resource for interference measurement in a velocity dimension needs to meet a constraint. For example, the constraint is that duration of the interference measurement resource in time domain is greater than a second threshold and/or a time domain repetition period is less than a third threshold. The sensing device selects, from the at least one second candidate interference measurement resource, a resource that meets the foregoing constraint as the first interference measurement resource. The foregoing constraint may be pre-configured in the sensing device, or may be determined by the sensing device based on an algorithm. This is not limited in this application.

In another possible implementation, the sensing device determines the first interference measurement resource from the at least one second candidate interference measurement resource based on the measurement dimension of the sensing measurement and a first correspondence. For explanations of the first correspondence, refer to related descriptions in step 401 described above. Details are not described herein again.

For example, Table 1-1 described above is used. If the sensing measurement dimension is the range measurement, the sensing device may determine, based on the sensing measurement dimension and the first correspondence, that resources corresponding to the measurement dimension are the resource 1 and the resource 2. If the resource 1 belongs to the second candidate interference measurement resource, for example, the resource 1 overlaps or partially overlaps a specific second candidate interference measurement resource, the sensing device determines that the resource 1 is the first interference measurement resource.

Optionally, when determining the first interference measurement resource, the sensing device not only refers to the measurement dimension of the sensing measurement, but also refers to an interference measurement range or a sensing service type. The following separately provides descriptions.

In a possible implementation, the sensing device determines the first interference measurement resource from the at least one second candidate interference measurement resource based on the measurement dimension of the sensing measurement and the interference measurement range.

The measurement dimension of the sensing measurement is used to determine a constraint on a feature of an interference measurement resource corresponding to the measurement dimension, and the interference measurement range is used to determine a threshold of the constraint on the feature. The sensing device determines, from the at least one second candidate interference measurement resource, a resource that meets the constraint on the feature of the interference measurement resource corresponding to the measurement dimension and that reaches the constraint threshold as the first interference measurement resource.

For example, if the measurement dimension of the sensing measurement is velocity measurement, a time domain feature of an interference measurement resource corresponding to the velocity measurement dimension needs to meet that a time domain repetition period is less than a specific threshold. In addition, the interference measurement range is used to determine the foregoing threshold. For example, if the interference measurement range is -v m/s to +v m/s (where v is a non-zero real number), the time domain repetition period of the interference measurement resource is less than λ/(2v) (where λ is a carrier wavelength), that is, the threshold is λ/(2v). For example, if the measurement dimension of the sensing measurement is the velocity measurement, and the interference measurement range is -v m/s to +v m/s, the sensing device selects, from the at least one second candidate interference measurement resource, a time-frequency resource whose time domain repetition period is less than λ/(2v) as the first interference measurement resource.

In another possible implementation, the sensing device determines the first interference measurement resource from the at least one second candidate interference measurement resource based on the measurement dimension of the sensing measurement, the interference measurement range, a first correspondence, and a second correspondence. For explanations of the first correspondence and the second correspondence, refer to related descriptions in step 401 described above. Details are not described herein again.

For example, Table 1-1 and Table 2-1 described above are used. If the sensing measurement dimension is the velocity measurement, the sensing device determines, based on the sensing measurement dimension and the first correspondence shown in Table 1-1, that interference measurement resources suitable for the velocity measurement include the resource 3, the resource 4, and the resource 5. If the interference measurement range is 5 m/s to 10 m/s, the sensing device determines, based on the interference measurement range and the second correspondence shown in Table 2-1, that an interference measurement resource suitable for 5 m/s to 10 m/s is the resource 4. Then, the sensing device determines, from the at least one second candidate interference measurement resource, a second candidate interference measurement resource that overlaps or partially overlaps the resource 4 as the first interference measurement resource.

In another possible implementation, the sensing device determines the first interference measurement resource from the at least one second candidate interference measurement resource based on the measurement dimension of the sensing measurement, the sensing service type, a first correspondence, and a third correspondence. For explanations of the first correspondence and the third correspondence, refer to related descriptions in step 401 described above. Details are not described herein again.

For example, Table 1-1 and Table 3-1 described above are used. If the measurement dimension of the sensing measurement is the velocity measurement, the sensing device determines, based on the measurement dimension and the first correspondence shown in Table 1-1, that interference measurement resources suitable for the velocity measurement include the resource 3, the resource 4, and the resource 5. If the sensing service type is measuring a velocity of a non-motor vehicle, the sensing device determines, based on the sensing service type and the third correspondence shown in Table 3-1, that an interference measurement resource suitable for measuring a velocity of a non-motor vehicle is the resource 3. Then, the sensing device determines, from the at least one second candidate interference measurement resource, a second candidate interference measurement resource that overlaps or partially overlaps the resource 3 as the first interference measurement resource.

It should be understood that, if the sensing device fails to select the first interference measurement resource from the at least one second candidate interference measurement resource, the sensing device does not participate in interference measurement.

It should be noted that step 502 is an optional step. For example, if the sensing device does not participate in the interference measurement, the sensing device does not perform step 502; or if the sensing device participates in the interference measurement, the sensing device performs step 502.

Step 503: The sensing device sends a second interference measurement response, and correspondingly, the interference device receives the second interference measurement response.

The second interference measurement response includes fourth resource indication information, and the fourth resource indication information indicates the first interference measurement resource.

The second interference measurement response indicates whether the sensing device participates in the interference measurement. For example, the second interference measurement response includes second indication information, one value of the second indication information indicates that the sensing device participates in the interference measurement, and another value of the second indication information indicates that the sensing device does not participate in the measurement. It should be understood that, if the second interference measurement response indicates that the sensing device does not participate in the interference measurement, the interference device and the sensing device do not perform subsequent step 504 and step 505; or if the second interference measurement response indicates that the sensing device participates in the interference measurement, the interference device and the sensing device perform subsequent step 504 and step 505. In addition, the second interference measurement response includes the fourth resource indication information, and the fourth resource indication information indicates the first interference measurement resource.

Step 504: The interference device sends an interference measurement signal by using the first interference measurement resource, and correspondingly, the sensing device receives, by using the first interference measurement resource, the interference measurement signal sent by the interference device.

Step 505: The sensing device determines interference measurement information based on the interference measurement signal.

In this embodiment, step 504 and step 505 are similar to step 202 and step 203 described above. For details, refer to related descriptions in step 202 and step 203 described above. Details are not described herein again.

In this embodiment, because the interference device provides the at least one second candidate interference measurement resource to the sensing device, the sensing device determines the first interference measurement resource based on the measurement dimension of the sensing measurement and the at least one second candidate interference measurement resource. Because the ultimately determined first interference measurement resource for transmission of the interference measurement signal is related to the measurement dimension of the sensing measurement of the sensing device, the interference measurement signal can reflect interference caused by the interference device to the sensing device in the measurement dimension of the sensing measurement. This helps the sensing device more accurately detect impact of the interference device on the sensing device, and improves efficiency of interference measurement in sensing scenarios. In addition, the interference device triggers negotiation with the sensing device to determine the first interference measurement resource, so that the interference device can actively trigger interference management in a scenario in which there are a small quantity of interference devices, thereby improving efficiency of the interference management.

In addition, after obtaining the interference measurement information, the sensing device performs interference management based on the interference measurement information. As shown in FIG. 6, the sensing device and the interference device may further perform the following steps.

Step 601: The sensing device determines, based on the interference measurement information, a parameter of a sensing signal and/or a sensing measurement resource occupied by the sensing signal.

The sensing signal is a measurement signal sent by the sensing device when performing sensing measurement. The sensing measurement resource is used to send the sensing signal. For example, the sensing signal may be a reference signal, for example, a channel state information reference signal (channel state information reference signal, CSI-RS), a demodulation reference signal (demodulation reference signal, DM-RS), or a positioning reference signal (positioning reference signal, PRS), that has been defined in existing communication, or may be a continuous wave (continuous wave, CW) signal, a frequency modulated continuous wave (frequency modulated CW, FMCW) signal, a linear frequency modulation (linear frequency modulation, LFM) signal, a phase modulated continuous wave (phase modulated CW, PMCW) signal, an orthogonal frequency division multiplexing (orthogonal frequency division multiplexing, OFDM) signal, or the like that is redefined.

Because the sensing device can determine, based on the interference measurement information, an interference level caused by the interference device to the sensing device, to reduce impact of the interference device on the sensing device, the sensing device determines, with reference to the interference measurement information, the sensing signal sent by the sensing device in a subsequent sensing measurement process. Specifically, the sensing device determines, based on the interference measurement information, the parameter of the sensing signal and/or the sensing measurement resource occupied by the sensing signal. The parameter of the sensing signal includes at least one of signal power, signal phase, or signal amplitude; and the sensing measurement resource includes at least one of a time domain resource, a frequency domain resource, or a port resource.

In a possible implementation, the sensing device determines the parameter of the sensing signal based on the interference measurement information, and configures a specific parameter, to reduce interference to the sensing signal in the measurement dimension as much as possible.

In an example, a difference between the power of the sensing signal determined by the sensing device and signal power of the interference measurement signal is greater than a preset threshold. For example, if the sensing device determines, based on the interference measurement information, that the power of the interference measurement signal is -30 dBm, and the preset power threshold is 80 dBm, the sensing device determines that the power of sending the sensing signal is -30 dBm+80 dBm, that is, 50 dBm.

In another example, a waveform (waveform) of the sensing signal determined by the sensing device is orthogonal to a waveform of the interference measurement signal, so that the sensing signal and the interference measurement signal do not interfere with each other in the measurement dimension. For example, when both the sensing device and the interference device use FMCW waveforms, and at a same moment, a frequency f1 of the FMCW waveform of the sensing device is close to a frequency f2 of the FMCW waveform of the interference device, the interference device may cause interference to the sensing device. To avoid interference, the sensing device may adjust the FMCW waveform used by the sensing device, so that a difference between the frequency of the FMCW waveform used by the sensing device and the frequency of the FMCW waveform used by the interference device meets a preset threshold at any moment. For another example, when both the sensing device and the interference device use PMCW waveforms, to avoid interference, the sensing device may adjust a phase sequence used to generate the PMCW waveform, so that a cross-correlation between the PMCW waveform of the sensing device and the PMCW waveform of the interference device is reduced to a value below a threshold.

In another possible implementation, the sensing device determines, based on the interference measurement information, the sensing measurement resource occupied by the sensing signal, to be specific, a sensing measurement resource used by the sensing device to send the sensing signal in a sensing measurement process.

In an example, the sensing measurement resource occupied by the sensing signal determined by the sensing device does not overlap the first interference measurement resource. Because the sensing measurement resource does not overlap the first interference measurement resource, the sensing device is not interfered by the interference device.

In another example, the sensing measurement resource occupied by the sensing signal determined by the sensing device overlaps or partially overlaps the first interference measurement resource, so that sensing measurement performed in the measurement dimension is not affected by a signal sent by using the first interference measurement resource.

Optionally, after the sensing device performs step 601, the sensing device may further perform step 603, and the interference device may further perform step 603. After the sensing device performs step 601, if interference from the interference device to the sensing device is reduced to a level that hardly affects the sensing measurement, the sensing device may not perform step 602, and therefore, the interference device is not triggered to perform step 603.

Step 602: The sensing device sends first information, and correspondingly, the interference device receives the first information.

Optionally, if a degree of interference indicated by the interference measurement information is greater than a first threshold, the sensing device sends the first information to the interference device. The first threshold is a critical value for triggering the sensing device to notify the interference device to adjust an interference signal. It may be understood that the first threshold is maximum interference tolerable by the sensing device. For example, when a degree of interference experienced by the sensing device is greater than the first threshold, a sensing measurement service of the sensing device may not be normally performed.

It should be understood that the first threshold may be a peak interference threshold, or may be an average interference threshold. This is not limited in this application. For example, if the interference measurement information is average power of the interference measurement signal having undergone sensing processing in the measurement dimension, the first threshold is a threshold of the average power (that is, the average interference threshold). For another example, if the interference measurement information is peak power of the interference measurement signal having undergone sensing processing in the measurement dimension, the first threshold is a threshold of the peak power (that is, the peak interference threshold). For another example, if the interference measurement information is a ratio of power of the interference measurement signal having undergone sensing processing to preset power, the first threshold is a threshold of the ratio.

Optionally, the first threshold is related to the measurement dimension of the sensing measurement.

Optionally, the first information indicates the interference device to adjust the parameter of the interference measurement signal and/or a resource occupied by the interference measurement signal, the parameter of the interference measurement signal includes at least one of signal power, signal phase, or signal amplitude, and the resource includes at least one of a time domain resource, a frequency domain resource, or a port resource.

In addition, the first information may be implemented in a plurality of manners, which are separately described below.

In a possible implementation, the first information includes an interference measurement report, and the interference measurement report includes the measurement dimension of the sensing measurement, the interference measurement information, and a second threshold. The second threshold is a degree of interference that the sensing device expects to achieve. It may be understood that the second threshold indicates a degree to which interference is expected to be controlled during normal operating of the sensing device. It may also be understood that the second threshold indicates a degree to which the sensing device recommends that the interference device reduce interference. Optionally, the second threshold is less than or equal to the first threshold.

In this implementation, to reduce interference caused by the interference device to the sensing device, in addition to providing the interference measurement information and the measurement dimension to the interference device, the sensing device further provides a reference value (that is, the second threshold) indicating a degree to which the interference device is recommended to reduce the interference measurement signal. This helps the interference device quickly and effectively perform interference adjustment, to improve efficiency and accuracy of the interference management.

In another possible implementation, the first information includes at least one adjustment indication, and each adjustment indication indicates the interference device to adjust one parameter of the interference measurement signal. The parameter includes at least one of signal power, signal phase, or signal amplitude.

In this implementation, the sensing device directly provides, to the interference device, the adjustment indication used to adjust the interference measurement signal, and the interference device only needs to adjust the parameter of the interference measurement signal based on the adjustment indication. This helps reduce processing overheads used by the interference device to calculate an adjusted parameter.

Optionally, the adjustment indication may indicate an adjustment amplitude of the interference measurement parameter. For example, power is adjusted. The adjustment indication included in the first information is 10 dB, indicating the interference device to reduce the power of the interference measurement signal by 10 dB.

Step 603: The interference device adjusts, based on the first information, the parameter of the interference measurement signal and/or the resource occupied by the interference measurement signal.

In an implementation, the first information includes an interference measurement report, and the interference measurement report includes the measurement dimension of the sensing measurement, the interference measurement information, and a second threshold. The interference measurement information can reflect a degree of current interference experienced by the sensing device, and the second threshold indicates a degree of interference expected by the sensing device. The interference device adjusts signal power of the interference measurement signal based on the second threshold, so that a degree of interference of an adjusted interference measurement signal to the sensing device is less than or equal to the second threshold. For example, if power of the interference measurement signal before adjustment is 40 dBm, average power of the interference measurement signal having undergone sensing processing in the measurement dimension is -60 dBm, and the second threshold is -80 dBm, the interference device determines that power of the adjusted interference measurement signal is 40 dBm-(-60 dBm+80 dBm), that is, 20 dBm, and average power of the adjusted interference measurement signal having undergone sensing processing in the measurement dimension is -80 dBm.

In another implementation, the first information includes at least one adjustment indication, and each adjustment indication indicates the interference device to adjust one parameter of the interference measurement signal. The interference device adjusts the interference measurement signal based on the at least one adjustment indication. For example, power is adjusted. The adjustment indication included in the first information is 10 dB, indicating the interference device to reduce the power of the interference measurement signal by 10 dB.

In this embodiment, after determining the interference measurement information, the sensing device can determine the sensing signal based on the interference measurement information, or indicate, by using the first information, the interference device to adjust the interference measurement signal. Therefore, interference of the interference device in the measurement dimension of the sensing measurement can be reduced by adjusting the sensing signal or adjusting the interference measurement signal, to more effectively mitigate or eliminate sensing interference.

In correspondence to the solutions provided in the foregoing method embodiments, embodiments of this application further provide corresponding apparatuses (for example, communication apparatuses) and a communication system. The apparatus includes a corresponding module or unit configured to perform each part in the foregoing embodiments. The module or unit may be software, hardware, or a combination of software and hardware. The following only briefly describes the apparatus and system. For implementation details of the solutions, refer to descriptions in the foregoing method embodiments. Details are not described below again.

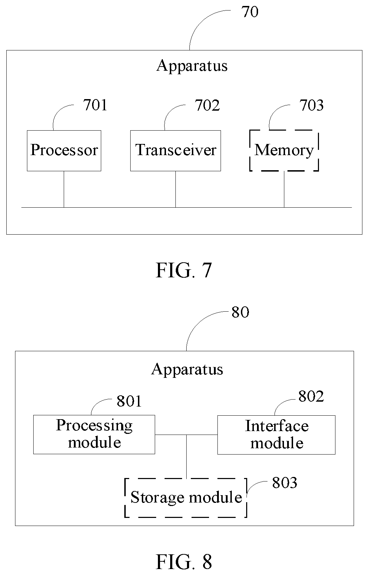

FIG. 7 is a diagram of a structure of an apparatus 70 according to an embodiment of this application. For specific implementations of the sensing device or the interference device in the flowchart shown in FIG. 2, FIG. 4, FIG. 5, or FIG. 6, refer to the internal structure of the apparatus 70 shown in FIG. 7. When the apparatus 70 is configured to implement the function of the sensing device in the method shown in FIG. 2, FIG. 4, FIG. 5, or FIG. 6, the apparatus 70 may be an access network device, a terminal device, or another device or apparatus that can implement a sensing measurement function via a radio signal. When the apparatus 70 is configured to implement the function of the interference device in the method shown in FIG. 2, FIG. 4, FIG. 5, or FIG. 6, the apparatus 70 may be an access network device, a terminal device, or another device that can transmit a radio signal and that may cause interference to another communication apparatus.

As shown in FIG. 7, the apparatus 70 may include a processor 701 and a transceiver 702. The processor 701 is coupled to the transceiver 702. The processor 701 may be a baseband processor, or may be a central processing unit (central processing unit, CPU). The baseband processor and the CPU may be integrated together or separated from each other. The processor 701 may be configured to implement various functions for the apparatus 70, for example, configured to process a communication protocol and communication data, or configured to control the entire apparatus 70, execute a software program, and process data of the software program. Alternatively, the processor 701 is configured to implement one or more of the foregoing functions. Optionally, the processor 701 may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. The processor 701 may be one processor, or may include a plurality of processors. This is not specifically limited herein.

The transceiver 702 may be configured to support receiving or sending of a radio frequency signal between the apparatus 70 and another communication apparatus, and the transceiver 702 may be connected to an antenna. The transceiver 702 includes a transmitter Tx and a receiver Rx. Specifically, one or more antennas may receive the radio frequency signal. The receiver Rx in the transceiver 702 is configured to: receive the radio frequency signal from the antenna, convert the radio frequency signal into a digital baseband signal or a digital intermediate frequency signal, and provide the digital baseband signal or the digital intermediate frequency signal to the processor 701, so that the processor 701 further processes the digital baseband signal or the digital intermediate frequency signal, for example, performs demodulation processing and decoding processing. In addition, the transmitter Tx in the transceiver 702 is further configured to: receive a modulated digital baseband signal or digital intermediate frequency signal from the processor 701, convert the modulated digital baseband signal or digital intermediate frequency signal into a radio frequency signal, and send the radio frequency signal through the one or more antennas. It should be understood that the transceiver 702 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

Optionally, the apparatus 70 further includes a memory 703. The memory 703 is mainly configured to store the software program and data. The memory 703 may exist independently, and is connected to the processor 701. Optionally, the memory 703 may be integrated with the processor 701, for example, integrated into one or more chips. The memory 703 can store program code for executing the technical solutions in embodiments of this application, and the processor 701 controls execution. Various types of executed computer program code may also be considered as drivers of the processor 701. It should be understood that FIG. 7 in this embodiment shows only one memory and one processor. However, during actual application, the apparatus 70 may include a plurality of processors or a plurality of memories. This is not specifically limited herein. In addition, the memory 703 may also be referred to as a storage medium, a storage device, or the like. The memory 703 may be a storage element (namely, an on-chip storage element) located on the same chip as the processor, or an independent storage element. This is not limited in embodiments of this application.

In a design, the apparatus 70 is configured to perform the method of the sensing device in the embodiment corresponding to FIG. 2. For example, the processor 701 in the apparatus 70 is configured to obtain a first interference measurement resource, where the first interference measurement resource is related to a measurement dimension of sensing measurement of the sensing device; and the transceiver 702 is configured to receive, by using the first interference measurement resource, an interference measurement signal sent by an interference device. Optionally, the processor 701 is further configured to determine interference measurement information based on the interference measurement signal, where the interference measurement information indicates a status of interference caused by the interference measurement signal to the sensing device in the sensing measurement dimension.

Optionally, the first interference measurement resource is related to an interference measurement range, and the interference measurement range is an effective measurement range of the sensing measurement in the measurement dimension. Optionally, the interference measurement information includes an interference measurement value of the interference measurement signal in the measurement dimension. Optionally, the interference measurement information includes an interference measurement value of the interference measurement signal within the interference measurement range in the measurement dimension.

In another design, the apparatus 70 is configured to perform the method of the sensing device in the embodiment corresponding to FIG. 4. For example, the transceiver 702 is configured to: send a first interference measurement request, where the first interference measurement request includes a measurement dimension of sensing measurement and first resource indication information, the first resource indication information indicates at least one first candidate interference measurement resource, and each first candidate interference measurement resource is related to the measurement dimension of the sensing measurement; and receive a first interference measurement response, where the first interference measurement response includes second resource indication information, the second resource indication information indicates a first interference measurement resource, and the first interference measurement resource is determined based on the at least one first candidate interference measurement resource.

Optionally, the first interference measurement request further includes an interference measurement range, and the first candidate interference measurement resource is related to the interference measurement range.

In a possible implementation, the processor 701 is configured to determine the at least one first candidate interference measurement resource based on the measurement dimension of the sensing measurement and a first correspondence, where the first correspondence includes at least one measurement dimension and at least one interference measurement resource corresponding to each measurement dimension.

In another possible implementation, the processor 701 is configured to determine the at least one first candidate interference measurement resource based on the measurement dimension of the sensing measurement and the interference measurement range.

In another design, the apparatus 70 is configured to perform the method of the sensing device in the embodiment corresponding to FIG. 5. For example, the transceiver 702 is configured to: receive a second interference measurement request, where the second interference measurement request includes third resource indication information, and the third resource indication information indicates at least one second candidate interference measurement resource supported by an interference device; and send a second interference measurement response, where the second interference measurement response includes fourth resource indication information, the fourth resource indication information indicates a first interference measurement resource, and the first interference measurement resource is determined based on the at least one second candidate interference measurement resource.

In a possible implementation, the processor 701 is configured to determine the first interference measurement resource based on a measurement dimension of sensing measurement and the at least one second candidate interference measurement resource.

In another possible implementation, the processor 701 is specifically configured to determine the first interference measurement resource based on the measurement dimension of the sensing measurement, an interference measurement range, and the at least one second candidate interference measurement resource.

Optionally, the second candidate interference measurement resource is related to the measurement dimension of the sensing measurement.

Optionally, the measurement dimension of the sensing measurement includes any one of the following:
range measurement; velocity measurement; angle measurement; imaging measurement; joint range-velocity measurement; joint range-angle measurement; joint velocity-angle measurement; or joint range-velocity-angle measurement.

In another design, the apparatus 70 is configured to perform the method of the sensing device in the embodiment corresponding to FIG. 6. For example, the processor 701 is configured to determine, based on interference measurement information, a parameter of a sensing signal and/or a sensing measurement resource occupied by the sensing signal, where the parameter of the sensing signal includes at least one of signal power, signal phase, or signal amplitude, and the sensing measurement resource includes at least one of a time domain resource, a frequency domain resource, or a port resource.

In a possible implementation, the transceiver 702 is configured to: when a degree of interference indicated by the interference measurement information is greater than a first threshold, send first information to an interference device, where the first information includes an interference measurement report, and the interference measurement report includes a measurement dimension of sensing measurement, the interference measurement information, and a second threshold. Alternatively, the transceiver 702 is configured to: when a degree of interference indicated by the interference measurement information is greater than a first threshold, send first information to an interference device, where the first information includes at least one adjustment indication, and each adjustment indication indicates the interference device to adjust one parameter of an interference measurement signal.

Optionally, the first information indicates the interference device to adjust the parameter of the interference measurement signal and/or a resource occupied by the interference measurement signal, the parameter of the interference measurement signal includes at least one of signal power, signal phase, or signal amplitude, and the resource includes at least one of a time domain resource, a frequency domain resource, or a port resource.

It should be noted that, for specific implementations and beneficial effects of this embodiment, refer to the method of the sensing device in the foregoing embodiments. Details are not described herein again.

In another design, the apparatus 70 is configured to perform the method of the interference device in the embodiment corresponding to FIG. 2. For example, the processor 701 in the apparatus 70 is configured to obtain a first interference measurement resource, where the first interference measurement resource is related to a measurement dimension of sensing measurement of a sensing device; and the transceiver 702 is configured to send an interference measurement signal by using the first interference measurement resource.

Optionally, the first interference measurement resource is related to an interference measurement range, and the interference measurement range is an effective measurement range of the sensing measurement in the measurement dimension. Optionally, the interference measurement signal is used by the sensing device to determine interference measurement information based on the interference measurement signal, where the interference measurement information indicates a status of interference caused by the interference measurement signal to the sensing device in the sensing measurement dimension. Optionally, the interference measurement information includes an interference measurement value of the interference measurement signal in the measurement dimension. Optionally, the interference measurement information includes an interference measurement value of the interference measurement signal within the interference measurement range in the measurement dimension.

In another design, the apparatus 70 is configured to perform the method of the interference device in the embodiment corresponding to FIG. 4. For example, the transceiver 702 is configured to: receive a first interference measurement request, where the first interference measurement request includes a measurement dimension of sensing measurement and first resource indication information, the first resource indication information indicates at least one first candidate interference measurement resource, and each first candidate interference measurement resource is related to the measurement dimension of the sensing measurement; and send a first interference measurement response, where the first interference measurement response includes second resource indication information, the second resource indication information indicates a first interference measurement resource, and the first interference measurement resource is determined based on the at least one first candidate interference measurement resource.

In a possible implementation, the processor 701 is configured to determine the first interference measurement resource based on the measurement dimension of the sensing measurement and the at least one first candidate interference measurement resource.

In a possible implementation, the first interference measurement request further includes an interference measurement range. The processor 701 is configured to determine the first interference measurement resource based on the measurement dimension of the sensing measurement, the interference measurement range, and the at least one first candidate interference measurement resource.

In another design, the apparatus 70 is configured to perform the method of the interference device in the embodiment corresponding to FIG. 5. For example, the transceiver 702 is configured to: send a second interference measurement request, where the second interference measurement request includes third resource indication information, and the third resource indication information indicates at least one second candidate interference measurement resource supported by the interference device; and receive a second interference measurement response, where the second interference measurement response includes fourth resource indication information, the fourth resource indication information indicates a first interference measurement resource, and the first interference measurement resource is determined based on the at least one second candidate interference measurement resource.

In another design, the apparatus 70 is configured to perform the method of the interference device in the embodiment corresponding to FIG. 6. For example, the transceiver 702 is configured to receive first information, where the first information includes an interference measurement report, and the interference measurement report includes a measurement dimension of sensing measurement, interference measurement information, and a second threshold. Alternatively, the transceiver 702 is configured to receive first information, where the first information includes at least one adjustment indication, and each adjustment indication indicates the interference device to adjust one parameter of an interference measurement signal.

In a possible implementation, the first information indicates the interference device to adjust the parameter of the interference measurement signal and/or a resource occupied by the interference measurement signal, the parameter of the interference measurement signal includes at least one of signal power, signal phase, or signal amplitude, and the resource includes at least one of a time domain resource, a frequency domain resource, or a port resource. The processor 701 is further configured to adjust, based on the first information, the parameter of the interference measurement signal and/or the resource occupied by the interference measurement signal.

It should be noted that, for specific implementations and beneficial effects of this embodiment, refer to the method of the interference device in the foregoing embodiments. Details are not described herein again.

As shown in FIG. 8, this application further provides an apparatus 80. The apparatus 80 may be a sensing device or an interference device, or may be a component (for example, an integrated circuit or a chip) of the sensing device or the interference device. The apparatus 80 may alternatively be another communication module configured to implement the method in the method embodiments of this application.

The apparatus 80 may include a processing module 801 (or referred to as a processing unit). Optionally, the apparatus 80 may further include an interface module 802 (or referred to as a transceiver unit or a transceiver module) and a storage module 803 (or referred to as a storage unit). The interface module 802 is configured to communicate with another device. The interface module 802 may be, for example, a transceiver module or an input/output module.

In a possible design, one or more modules in FIG. 8 may be implemented by one or more processors, may be implemented by one or more processors and memories, may be implemented by one or more processors and transceivers, or may be implemented by one or more processors, memories, and transceivers. This is not limited in embodiments of this application. The processor, the memory, and the transceiver may be disposed separately or may be integrated.

The apparatus 80 has a function of implementing the sensing device described in embodiments of this application. For example, the apparatus 80 includes a module, a unit, or a means (means) corresponding to a terminal device performing the steps related to the terminal device described in embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiments.

Alternatively, the apparatus 80 has a function of implementing the interference device described in embodiments of this application. For example, the apparatus 80 includes a module, a unit, or a means (means) corresponding to an access network device performing the steps related to the access network device described in embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiments.

In addition, this application provides a computer program product. The computer program product includes one or more computer instructions. When the computer program instructions are loaded and executed on a computer, all or some of the procedures or functions according to embodiments of this application are generated. For example, the method related to the sensing device in FIG. 2, FIG. 4, FIG. 5, or FIG. 6 above is implemented. For another example, the method related to the sensing device in FIG. 2, FIG. 4, FIG. 5, or FIG. 6 is implemented. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program, and the computer program is executed by a processor to implement the method related to the sensing device in FIG. 2, FIG. 4, FIG. 5, or FIG. 6.

In addition, this application further provides a computer-readable storage medium. The storage medium stores a computer program, and the computer program is executed by a processor to implement the method related to the interference device in FIG. 2, FIG. 4, FIG. 5, or FIG. 6.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

## Claims

1. An interference measurement method, applied to a sensing device, comprising:
obtaining a first interference measurement resource, wherein the first interference measurement resource is related to a measurement dimension of sensing measurement of the sensing device; and
receiving, by using the first interference measurement resource, an interference measurement signal sent by an interference device.

2. The method according to claim 1, wherein the first interference measurement resource is related to an interference measurement range, and the interference measurement range is an effective measurement range of the sensing measurement in the measurement dimension.

3. The method according to claim 1 or 2, wherein the method further comprises:
determining interference measurement information based on the interference measurement signal, wherein the interference measurement information indicates a status of interference caused by the interference measurement signal to the sensing device in the sensing measurement dimension.

4. The method according to claim 3, wherein the interference measurement information comprises an interference measurement value of the interference measurement signal in the measurement dimension.

5. The method according to any one of claims 1 to 4, wherein the obtaining the first interference measurement resource comprises:
sending a first interference measurement request, wherein the first interference measurement request comprises the measurement dimension of the sensing measurement and first resource indication information, the first resource indication information indicates at least one first candidate interference measurement resource, and each first candidate interference measurement resource is related to the measurement dimension of the sensing measurement; and
receiving a first interference measurement response, wherein the first interference measurement response comprises second resource indication information, the second resource indication information indicates the first interference measurement resource, and the first interference measurement resource is determined based on the at least one first candidate interference measurement resource.

6. The method according to claim 5, wherein the first interference measurement request further comprises the interference measurement range, and the first candidate interference measurement resource is related to the interference measurement range.

7. The method according to claim 5 or 6, wherein the method further comprises:
determining the at least one first candidate interference measurement resource based on the measurement dimension of the sensing measurement and a first correspondence, wherein the first correspondence comprises at least one measurement dimension and at least one interference measurement resource corresponding to each measurement dimension.

8. The method according to claim 5, wherein the method further comprises:
determining the at least one first candidate interference measurement resource based on the measurement dimension of the sensing measurement and the interference measurement range.

9. The method according to any one of claims 1 to 4, wherein the obtaining the first interference measurement resource comprises:
receiving a second interference measurement request, wherein the second interference measurement request comprises third resource indication information, and the third resource indication information indicates at least one second candidate interference measurement resource supported by the interference device; and
sending a second interference measurement response, wherein the second interference measurement response comprises fourth resource indication information, the fourth resource indication information indicates the first interference measurement resource, and the first interference measurement resource is determined based on the at least one second candidate interference measurement resource.

10. The method according to claim 9, wherein the method further comprises:
determining the first interference measurement resource based on the measurement dimension of the sensing measurement and the at least one second candidate interference measurement resource.

11. The method according to claim 10, wherein the determining the first interference measurement resource based on the measurement dimension of the sensing measurement and the at least one second candidate interference measurement resource comprises:
determining the first interference measurement resource based on the measurement dimension of the sensing measurement, the interference measurement range, and the at least one second candidate interference measurement resource.

12. The method according to claim 9, wherein the second candidate interference measurement resource is related to the measurement dimension of the sensing measurement.

13. The method according to any one of claims 1 to 12, wherein the measurement dimension of the sensing measurement comprises any one of the following:
range measurement;
velocity measurement;
angle measurement;
imaging measurement;
joint range-velocity measurement;
joint range-angle measurement;
joint velocity-angle measurement; or
joint range-velocity-angle measurement.

14. The method according to any one of claims 3 to 13, wherein the method further comprises:
determining, based on the interference measurement information, a parameter of a sensing signal and/or a sensing measurement resource occupied by the sensing signal, wherein
the parameter of the sensing signal comprises at least one of signal power, signal phase, or signal amplitude; and the sensing measurement resource comprises at least one of a time domain resource, a frequency domain resource, or a port resource.

15. The method according to any one of claims 3 to 14, wherein the method further comprises:
if a degree of interference indicated by the interference measurement information is greater than a first threshold, sending first information to the interference device, wherein the first information comprises an interference measurement report, the interference measurement report comprises the measurement dimension of the sensing measurement, the interference measurement information, and a second threshold, and the second threshold is less than or equal to the first threshold.

16. The method according to any one of claims 3 to 14, wherein the method further comprises:
if a degree of interference indicated by the interference measurement information is greater than a first threshold, sending first information to the interference device, wherein the first information comprises at least one adjustment indication, and each adjustment indication indicates the interference device to adjust one parameter of the interference measurement signal.

17. The method according to claim 15 or 16, wherein the first information indicates the interference device to adjust the parameter of the interference measurement signal and/or a resource occupied by the interference measurement signal, the parameter of the interference measurement signal comprises at least one of signal power, signal phase, or signal amplitude, and the resource comprises at least one of a time domain resource, a frequency domain resource, or a port resource.

18. An interference measurement method, applied to an interference device, comprising:
obtaining a first interference measurement resource, wherein the first interference measurement resource is related to a measurement dimension of sensing measurement of a sensing device; and
sending an interference measurement signal by using the first interference measurement resource.

19. The method according to claim 18, wherein the first interference measurement resource is related to an interference measurement range, and the interference measurement range is an effective measurement range of the sensing measurement in the measurement dimension.

20. The method according to claim 18 or 19, wherein the interference measurement signal is used by the sensing device to determine interference measurement information based on the interference measurement signal, and the interference measurement information indicates a status of interference caused by the interference measurement signal to the sensing device in the sensing measurement dimension.

21. The method according to claim 20, wherein the interference measurement information comprises an interference measurement value of the interference measurement signal in the measurement dimension.

22. The method according to any one of claims 18 to 21, wherein the obtaining the first interference measurement resource comprises:
receiving a first interference measurement request, wherein the first interference measurement request comprises the measurement dimension of the sensing measurement and first resource indication information, the first resource indication information indicates at least one first candidate interference measurement resource, and each first candidate interference measurement resource is related to the measurement dimension of the sensing measurement; and
sending a first interference measurement response, wherein the first interference measurement response comprises second resource indication information, the second resource indication information indicates the first interference measurement resource, and the first interference measurement resource is determined based on the at least one first candidate interference measurement resource.

23. The method according to claim 22, wherein the method further comprises:
determining the first interference measurement resource based on the measurement dimension of the sensing measurement and the at least one first candidate interference measurement resource.

24. The method according to claim 23, wherein the first interference measurement request further comprises the interference measurement range; and
the determining the first interference measurement resource based on the measurement dimension of the sensing measurement and the at least one first candidate interference measurement resource comprises:
determining the first interference measurement resource based on the measurement dimension of the sensing measurement, the interference measurement range, and the at least one first candidate interference measurement resource.

25. The method according to any one of claims 18 to 21, wherein the obtaining the first interference measurement resource comprises:
sending a second interference measurement request, wherein the second interference measurement request comprises third resource indication information, and the third resource indication information indicates at least one second candidate interference measurement resource supported by the interference device; and
receiving a second interference measurement response, wherein the second interference measurement response comprises fourth resource indication information, the fourth resource indication information indicates the first interference measurement resource, and the first interference measurement resource is determined based on the at least one second candidate interference measurement resource.

26. The method according to claim 25, wherein the second candidate interference measurement resource is related to the measurement dimension of the sensing measurement.

27. The method according to any one of claims 18 to 26, wherein the measurement dimension of the sensing measurement comprises any one of the following:
range measurement;
velocity measurement;
angle measurement;
imaging measurement;
joint range-velocity measurement;
joint range-angle measurement;
joint velocity-angle measurement; or
joint range-velocity-angle measurement.

28. The method according to any one of claims 18 to 27, wherein the method further comprises:
receiving first information, wherein the first information comprises an interference measurement report, the interference measurement report comprises the measurement dimension of the sensing measurement, the interference measurement information, and a second threshold, and the second threshold is less than or equal to a first threshold.

29. The method according to any one of claims 18 to 28, wherein the method further comprises:
receiving first information, wherein the first information comprises at least one adjustment indication, and each adjustment indication indicates the interference device to adjust one parameter of the interference measurement signal.

30. The method according to claim 28 or 29, wherein the first information indicates the interference device to adjust the parameter of the interference measurement signal and/or a resource occupied by the interference measurement signal, the parameter of the interference measurement signal comprises at least one of signal power, signal phase, or signal amplitude, and the resource comprises at least one of a time domain resource, a frequency domain resource, or a port resource; and
the method further comprises:
adjusting, based on the first information, the parameter of the interference measurement signal and/or the resource occupied by the interference measurement signal.

31. An apparatus, configured to implement a function of a sensing device, comprising:
a transceiver module, configured to obtain a first interference measurement resource, wherein the first interference measurement resource is related to a measurement dimension of sensing measurement of the sensing device; and
the transceiver module is further configured to receive, by using the first interference measurement resource, an interference measurement signal sent by an interference device.

32. The apparatus according to claim 31, wherein the first interference measurement resource is related to an interference measurement range, and the interference measurement range is an effective measurement range of the sensing measurement in the measurement dimension.

33. The apparatus according to claim 31 or 32, wherein the apparatus further comprises:
a processing module, configured to determine interference measurement information based on the interference measurement signal, wherein the interference measurement information indicates a status of interference caused by the interference measurement signal to the sensing device in the sensing measurement dimension.

34. The apparatus according to claim 33, wherein the interference measurement information comprises an interference measurement value of the interference measurement signal in the measurement dimension.

35. The apparatus according to any one of claims 31 to 34, wherein the transceiver module is specifically configured to:
send a first interference measurement request, wherein the first interference measurement request comprises the measurement dimension of the sensing measurement and first resource indication information, the first resource indication information indicates at least one first candidate interference measurement resource, and each first candidate interference measurement resource is related to the measurement dimension of the sensing measurement; and
receive a first interference measurement response, wherein the first interference measurement response comprises second resource indication information, the second resource indication information indicates the first interference measurement resource, and the first interference measurement resource is determined based on the at least one first candidate interference measurement resource.

36. The apparatus according to claim 35, wherein the first interference measurement request further comprises the interference measurement range, and the first candidate interference measurement resource is related to the interference measurement range.

37. The apparatus according to claim 35 or 36, wherein the processing module is further configured to determine the at least one first candidate interference measurement resource based on the measurement dimension of the sensing measurement and a first correspondence, wherein the first correspondence comprises at least one measurement dimension and at least one interference measurement resource corresponding to each measurement dimension.

38. The apparatus according to claim 35, wherein the processing module is further configured to determine the at least one first candidate interference measurement resource based on the measurement dimension of the sensing measurement and the interference measurement range.

39. The apparatus according to any one of claims 31 to 34, wherein the transceiver module is specifically configured to:
receive a second interference measurement request, wherein the second interference measurement request comprises third resource indication information, and the third resource indication information indicates at least one second candidate interference measurement resource supported by the interference device; and
send a second interference measurement response, wherein the second interference measurement response comprises fourth resource indication information, the fourth resource indication information indicates the first interference measurement resource, and the first interference measurement resource is determined based on the at least one second candidate interference measurement resource.

40. The apparatus according to claim 39, wherein the processing module is further configured to determine the first interference measurement resource based on the measurement dimension of the sensing measurement and the at least one second candidate interference measurement resource.

41. The apparatus according to claim 40, wherein the processing module is specifically configured to determine the first interference measurement resource based on the measurement dimension of the sensing measurement, the interference measurement range, and the at least one second candidate interference measurement resource.

42. The apparatus according to claim 39, wherein the second candidate interference measurement resource is related to the measurement dimension of the sensing measurement.

43. The apparatus according to any one of claims 31 to 42, wherein the measurement dimension of the sensing measurement comprises any one of the following:
range measurement;
velocity measurement;
angle measurement;
imaging measurement;
joint range-velocity measurement;
joint range-angle measurement;
joint velocity-angle measurement; or
joint range-velocity-angle measurement.

44. The apparatus according to any one of claims 33 to 43, wherein the processing module is further configured to determine, based on the interference measurement information, a parameter of a sensing signal and/or a sensing measurement resource occupied by the sensing signal, wherein the parameter of the sensing signal comprises at least one of signal power, signal phase, or signal amplitude, and the sensing measurement resource comprises at least one of a time domain resource, a frequency domain resource, or a port resource.

45. The apparatus according to any one of claims 33 to 44, wherein the transceiver module is further configured to:
when a degree of interference indicated by the interference measurement information is greater than a first threshold, send first information to the interference device, wherein the first information comprises an interference measurement report, the interference measurement report comprises the measurement dimension of the sensing measurement, the interference measurement information, and a second threshold, and the second threshold is less than or equal to the first threshold.

46. The apparatus according to any one of claims 33 to 44, wherein the transceiver module is further configured to:
when a degree of interference indicated by the interference measurement information is greater than a first threshold, send first information to the interference device, wherein the first information comprises at least one adjustment indication, and each adjustment indication indicates the interference device to adjust one parameter of the interference measurement signal.

47. The apparatus according to claim 45 or 46, wherein the first information indicates the interference device to adjust the parameter of the interference measurement signal and/or a resource occupied by the interference measurement signal, the parameter of the interference measurement signal comprises at least one of signal power, signal phase, or signal amplitude, and the resource comprises at least one of a time domain resource, a frequency domain resource, or a port resource.

48. An apparatus, configured to implement a function of an interference device, comprising:
a transceiver module, configured to obtain a first interference measurement resource, wherein the first interference measurement resource is related to a measurement dimension of sensing measurement of a sensing device; and
the transceiver module is further configured to send an interference measurement signal by using the first interference measurement resource.

49. The apparatus according to claim 48, wherein the first interference measurement resource is related to an interference measurement range, and the interference measurement range is an effective measurement range of the sensing measurement in the measurement dimension.

50. The apparatus according to claim 48 or 49, wherein the interference measurement signal is used by the sensing device to determine interference measurement information based on the interference measurement signal, and the interference measurement information indicates interference caused by the interference measurement signal to the sensing device in the sensing measurement dimension.

51. The apparatus according to claim 50, wherein the interference measurement information comprises an interference measurement value of the interference measurement signal in the measurement dimension.

52. The apparatus according to any one of claims 48 to 51, wherein the transceiver module is specifically configured to:
receive a first interference measurement request, wherein the first interference measurement request comprises the measurement dimension of the sensing measurement and first resource indication information, the first resource indication information indicates at least one first candidate interference measurement resource, and each first candidate interference measurement resource is related to the measurement dimension of the sensing measurement; and
send a first interference measurement response, wherein the first interference measurement response comprises second resource indication information, the second resource indication information indicates the first interference measurement resource, and the first interference measurement resource is determined based on the at least one first candidate interference measurement resource.

53. The apparatus according to claim 52, wherein the apparatus further comprises:
a processing module, configured to determine the first interference measurement resource based on the measurement dimension of the sensing measurement and the at least one first candidate interference measurement resource.

54. The apparatus according to claim 53, wherein the first interference measurement request further comprises the interference measurement range; and
the processing module is specifically configured to determine the first interference measurement resource based on the measurement dimension of the sensing measurement, the interference measurement range, and the at least one first candidate interference measurement resource.

55. The apparatus according to any one of claims 48 to 51, wherein the transceiver module is specifically configured to:
send a second interference measurement request, wherein the second interference measurement request comprises third resource indication information, and the third resource indication information indicates at least one second candidate interference measurement resource supported by the interference device; and
receive a second interference measurement response, wherein the second interference measurement response comprises fourth resource indication information, the fourth resource indication information indicates the first interference measurement resource, and the first interference measurement resource is determined based on the at least one second candidate interference measurement resource.

56. The apparatus according to claim 55, wherein the second candidate interference measurement resource is related to the measurement dimension of the sensing measurement.

57. The apparatus according to any one of claims 48 to 56, wherein the measurement dimension of the sensing measurement comprises any one of the following:
range measurement;
velocity measurement;
angle measurement;
imaging measurement;
joint range-velocity measurement;
joint range-angle measurement;
joint velocity-angle measurement; or
joint range-velocity-angle measurement.

58. The apparatus according to any one of claims 48 to 57, wherein the transceiver module is further configured to receive first information, wherein the first information comprises an interference measurement report, the interference measurement report comprises the measurement dimension of the sensing measurement, the interference measurement information, and a second threshold, and the second threshold is less than or equal to a first threshold.

59. The apparatus according to any one of claims 48 to 58, wherein the transceiver module is further configured to receive first information, wherein the first information comprises at least one adjustment indication, and each adjustment indication indicates the interference device to adjust one parameter of the interference measurement signal.

60. The apparatus according to claim 58 or 59, wherein the first information indicates the interference device to adjust the parameter of the interference measurement signal and/or a resource occupied by the interference measurement signal, the parameter of the interference measurement signal comprises at least one of signal power, signal phase, or signal amplitude, and the resource comprises at least one of a time domain resource, a frequency domain resource, or a port resource; and
the processing module is further configured to adjust, based on the first information, the parameter of the interference measurement signal and/or the resource occupied by the interference measurement signal.

61. An apparatus, comprising a processor, wherein the processor is configured to perform the method according to any one of claims 1 to 17; or configured to perform the method according to any one of claims 18 to 30.

62. A computer-readable storage medium, storing instructions, wherein when the instructions are run on a computer, the computer is caused to perform the method according to any one of claims 1 to 17, or perform the method according to any one of claims 18 to 30.
